# EUROPÄISCHE PATENTSCHRIFT

(11) **EP 4 255 783 B1**
(45) Veröffentlichungstag und Bekanntmachung des Hinweises auf die Patenterteilung: **31.12.2025**
(21) Anmeldenummer: 21831218.9
(22) Anmeldetag: 29.11.2021
(51) Int. Cl.: B60W 30/14, B60W 50/029, B60W 50/035, B60W 50/038, B60W 30/10, B60W 10/20, B62D 5/00

(54) **LENKSYSTEM EINES KRAFTFAHRZEUGS UND VERFAHREN ZUR STEUERUNG EINES LENKSYSTEMS EINES KRAFTFAHRZEUGS**
STEERING SYSTEM OF A MOTOR VEHICLE AND METHOD FOR CONTROLLING A STEERING SYSTEM OF A MOTOR VEHICLE
SYSTÈME DE DIRECTION D'UN VÉHICULE À MOTEUR ET PROCÉDÉ DE COMMANDE D'UN SYSTÈME DE DIRECTION D'UN VÉHICULE À MOTEUR

(30) Priorität: 02.12.2020 DE 102020215224
(43) Veröffentlichungstag der Anmeldung: 11.10.2023
(73) Patentinhaber: thyssenkrupp Presta AG, 9492 Eschen (LI); thyssenkrupp AG, 45143 Essen (DE)
(72) Erfinder: POLMANS, Kristof, 6464 Tarrenz (AT)
(74) Vertreter: thyssenkrupp Intellectual Property GmbH
(86) Internationale Anmeldenummer: PCT/EP2021/083274
(87) Internationale Veröffentlichungsnummer: WO 2022/117476

(56) Entgegenhaltungen:
- WO-A1-2019/224156
- DE-A1- 102017 221 289
- DE-A1- 102018 207 311
- DE-A1- 102018 218 588

## Beschreibung

### Stand der Technik

Die Erfindung betrifft ein Lenksystem für ein Kraftfahrzeug, umfassend eine Mehrzahl von mit jeweils mindestens einem Rad wirkverbundenen Aktuatoren und einer damit verbundenen Lenksteuereinheit, die eine Eingabeeinheit und eine Ausgabeeinheit aufweist und ausgestaltet und eingerichtet ist, um die Aktuatoren derart anzusteuern, dass das Kraftfahrzeugs abhängig von in die Eingabeeinheit eingegebenen Eingabesignalen auf einem vorgegebenen Bahnverlauf geführt wird, wobei die Lenksteuereinheit eine Bereitschaftserfassungseinheit und eine Geschwindigkeitsbestimmungseinheit aufweist, wobei die Bereitschaftserfassungseinheit ausgestaltet und eingerichtet ist zur Erfassung von Betriebsbereitschaftswerten der Aktuatoren und die Geschwindigkeitsbestimmungseinheit ausgestaltet und eingerichtet ist, um aus den erfassten Betriebsbereitschaftswerten zulässige Geschwindigkeitswerte der Bahngeschwindigkeit des Kraftfahrzeugs zu bestimmen. Die Erfindung umfasst weiterhin ein Verfahren zur Steuerung eines Lenksystems eines Kraftfahrzeugs.

Ein derartiges Lenksystem eines Kraftfahrzeugs, im Folgenden auch als Kraftfahrzeuglenksystem oder kurz als Lenksystem bezeichnet, weist mehrere Lenkeinrichtungen oder Lenkaktuatoren auf, im Folgenden kurz Aktuatoren genannt, die abhängig von eingegebenen Lenkbefehlen angesteuert werden, um eine Querführung des Fahrzeugs relativ zur Fahrbahn zu bewirken und auf einer durch die Lenkbefehle definierten Bahnführung zu halten.

Die Aktuatoren umfassen an eine Lenksteuereinheit angeschlossene elektrische Stellelemente, welche mit den Rädern des Fahrzeugs wirkverbunden sind, beispielsweise Lenksteller zur Erzeugung eines Lenkeinschlags durch Winkelverstellung einzelner Räder oder Gruppen von Rädern, Antriebs- oder Bremseinrichtungen zur gesteuerten Beaufschlagung einzelner Räder oder Gruppen von Rädern mit definierten Antriebs- oder Bremsmomenten für das sogenannte "torque-vectoring", und/oder einzelnen oder Gruppen von Rädern zugeordnete verstellbare Fahrwerkskomponenten wie Radaufhängungen, Federelemente, Dämpferelemente oder dergleichen. Darüber hinaus können weitere hier nicht genannte oder Kombinationen von Aktuatoren vorgesehen sein, die geeignet und eingerichtet sein können, um einzeln oder in Kombination eine gesteuerte Querführung des Fahrzeugs zu bewirken.

Um ein möglichst hohes Sicherheitsniveau zu realisieren, ist es bekannt, zur Minimierung des Ausfallrisikos der Fahrzeuglenkung das Lenksystem durch Bereitstellung mehrerer unabhängig aktivierbarer Aktuatoren redundant auszugestalten. Dies betrifft insbesondere steer-by-wire-Lenksysteme, welche keine mechanische Rückfallebene durch eine mechanische Verbindung zwischen einer manuellen Lenkhandhabe und lenkbaren Rädern haben, sondern die Lenkung allein über elektrische Steuersignale ansteuern, welche im manuellen Fahrbetrieb durch manuellen Lenkeingriff über eine elektrische Lenkhandhabe erzeugt werden können, oder im autonomen Fahrbetrieb über eine Schnittstelle übermittelt werden können. Derartige Lenksysteme sind beispielsweise in der DE 10 2015 009241 A1 oder der DE 10 2018 008 741 A1 beschrieben.

Um das Lenksystem redundant auszulegen, ist es aus dem Stand der Technik bekannt, beim Ausfall eines Aktuators das Fahrzeug allein durch einen dann noch intakten Aktuator zu lenken. Vorteilhaft dabei ist die erhöhte Ausfallsicherheit und die Manövrierbarkeit des Fahrzeugs im Störfall. Es verbleiben jedoch Sicherheitsrisiken im Fahrbetrieb durch eine abweichende Lenkcharakteristik oder Lenkeffektivität, wodurch beispielsweise die Manövrierfähigkeit in bestimmten Fahrsituationen beeinträchtigt sein kann, was einen negativen Einfluss auf die Fahrzeugsicherheit hat.

Ein Lenksystem der eingangs genannten Art ist beispielsweise aus der DE 10 2018 218588 A1, der DE 10 2018 207311 A1 oder der DE 10 2017 221289 A1 bekannt.

Angesichts der vorangehend erläuterten Problematik ist es eine Aufgabe der vorliegenden Erfindung, ein höheres Sicherheitsniveau der Fahrzeuglenkung im Störfall zu ermöglichen.

### Darstellung der Erfindung

Diese Aufgabe wird erfindungsgemäß gelöst durch das Lenksystem für ein Kraftfahrzeug mit den Merkmalen des Anspruchs 1 und dem Verfahren zur Steuerung eines Lenksystems eines Kraftfahrzeugs gemäß Anspruch 12. Vorteilhafte Weiterbildungen ergeben sich aus den Unteransprüchen, sowie einem Kraftfahrzeug nach Anspruch 21.

Bei einem Lenksystem für ein Kraftfahrzeug, umfassend eine Mehrzahl von mit jeweils mindestens einem Rad wirkverbundenen Aktuatoren und einer damit verbundenen Lenksteuereinheit, die eine Eingabeeinheit und eine Ausgabeeinheit aufweist und ausgestaltet und eingerichtet ist, um die Aktuatoren derart anzusteuern, dass das Kraftfahrzeugs abhängig von in die Eingabeeinheit eingegebenen Eingabesignalen auf einem vorgegebenen Bahnverlauf geführt wird, wobei die Lenksteuereinheit eine Bereitschaftserfassungseinheit und eine Geschwindigkeitsbestimmungseinheit aufweist, wobei die Bereitschaftserfassungseinheit ausgestaltet und eingerichtet ist zur Erfassung von Betriebsbereitschaftswerten der Aktuatoren und die Geschwindigkeitsbestimmungseinheit ausgestaltet und eingerichtet ist, um aus den erfassten Betriebsbereitschaftswerten zulässige Geschwindigkeitswerte der Bahngeschwindigkeit des Kraftfahrzeugs zu bestimmen, ist erfindungsgemäß vorgesehen, dass die Bereitschaftserfassungseinrichtung ausgestaltet und eingerichtet ist, aus den erfassten Betriebsbereitschaftswerten eine Zustandsklasse zu bestimmen und an die Geschwindigkeitsbestimmungseinheit zu übermitteln, die ausgestaltet und eingerichtet ist, abhängig von der Zustandsklasse mindestens einen zulässigen Geschwindigkeitswert zu bestimmen.

Gemäß der Erfindung ist vorgesehen, dass die Bereitschaftserfassungseinrichtung ausgestaltet und eingerichtet ist, aus den erfassten Betriebsbereitschaftswerten eine Zustandsklasse zu bestimmen und an die Geschwindigkeitsbestimmungseinheit zu übermitteln, die ausgestaltet und eingerichtet ist, abhängig von der Zustandsklasse mindestens einen zulässigen Geschwindigkeitswert zu bestimmen. Eine Zustandsklasse ist ein aus den ermittelten Betriebsbereitschaftswerten der einzelnen Aktuatoren bestimmter Gesamt-Betriebsbereitschaftswert des Lenksystems. Dazu werden spezifische Funktionsparameter der verschiedenen Aktuatoren, wie beispielsweise Lenkeffektivität, Geschwindigkeitsabhängigkeit, Abhängigkeit von Fahrzeugzustandsparametern (Zuladung etc.) und/oder externen Parameter (Temperatur, Feuchtigkeit, Fahrbahnzustand und dergleichen) ein entsprechend gewichteter Wert der Zustandsklasse erzeugt, der mit einem zulässigen Geschwindigkeitswert bzw. Geschwindigkeitsbereich korreliert ist. Der Vorteil dabei ist, dass eine jeweilige Zustandsklasse eine klare und eindeutige Information über den Systemzustand des gesamten Lenksystems geben kann und dadurch vorteilhaft zur Steuerung und Begrenzung der Fahrzeuggeschwindigkeit geeignet ist. Die Zustandsklasse kann als Geschwindigkeitssteuersignal zur Begrenzung der Bahngeschwindigkeit an die Geschwindigkeitssteuerung des Kraftfahrzeugs ausgegeben werden, beispielsweise als Maximalgeschwindigkeit und/oder Mindestgeschwindigkeit.

In einer vorteilhaften Weiterbildung ist eine Geschwindigkeitssteuerung für das Kraftfahrzeug vorgesehen, die die Geschwindigkeit des Kraftfahrzeugs beeinflussen kann, wobei die Geschwindigkeitsbestimmungseinheit weiter dazu eingerichtet ist, die zulässigen Geschwindigkeitswerte als damit korrelierte Geschwindigkeitssteuersignale an die Geschwindigkeitssteuerung auszugeben. Die Geschwindigkeitssteuereinheit kann die von der Geschwindigkeitsbestimmungseinheit als Geschwindigkeitssteuersignale bereitgestellten zulässige Geschwindigkeitswerte zur Steuerung der Fahrzeuggeschwindigkeit nutzen. Insbesondere werden die zulässigen Geschwindigkeitswerte als Grenzwerte der Geschwindigkeit behandelt.

Im Weiteren werden die Begriffe Kraftfahrzeug und Fahrzeug synonym verwendet.

Soweit im Folgenden von einem Rad die Rede ist, wird damit ein Fahrzeugrad oder eine Gruppe von Fahrzeugrädern gemeint, welches mit einem oder mehreren Aktuatoren einer Lenkeinrichtung zur Erzeugung einer Querführung des Fahrzeugs wirkverbunden ist. Die Aktuatoren weisen elektrische Stellglieder auf oder sind an solche angeschlossen, und sind elektrisch mit der Lenksteuereinheit verbunden, welche eine elektrische bzw. elektronische Steuereinheit aufweist, welche zum Empfang, zur Verarbeitung und zur Abgabe elektrischer Steuersignale eingerichtet und ausgebildet ist. Dabei weist die Eingabeeinheit eine Befehlseingabeeinheit zur Eingabe von Lenkbefehlen auf, beispielsweise in Form elektrischer Steuersignale einer manuellen Lenkhandhabe und/oder extern bereitgestallten und übermittelten Steuersignalen, beispielsweise für autonomes Fahren. Eine Eingabe von externen Parametern, zur Rückmeldung der Bahnführung etc. ist ebenfalls möglich. Die Ausgabeeinheit ist ausgestaltet und eingerichtet, um Steuersignale zur Ansteuerung der Aktuatoren auszugeben, zur Realisierung einer Bahnführung entsprechend den in die Eingabeeinheit eingegebenen Lenkbefehlen.

Durch die Bereitschaftserfassungseinheit kann eine im Betrieb fortlaufende Überwachung und Erfassung des Betriebszustands erfolgen, insbesondere der Betriebsbereitschaft der Aktuatoren. Dabei meint "fortlaufend", dass während des Betriebs kontinuierlich oder in vorgegebenen Zeitintervallen Informationen zur Bereitschaft gemessen und bereitgestellt werden. Hierzu kann die Bereitschaftserfassungseinheit im Fahrbetrieb aktuelle Betriebsbereitschaftswerte von den Aktuatoren abfragen oder empfangen, die bevorzugt einen relativen Betriebsbereitschaftsgrad oder Verfügbarkeitsgrad der jeweiligen Aktuatoren anzeigen, beispielsweise zwischen 100%, was der vollen Funktion entspricht, und 0%, was einem völligen Ausfall entspricht. Die Betriebserfassungseinheit kann Teil der Eingabeeinheit sein, oder eingangsseitig an diese angeschlossen sein.

Die Geschwindigkeitsbestimmungseinheit ist als Teil der Lenksteuerungseinheit ausgebildet oder mit dieser verbunden und derart ausgestaltet und eingerichtet, aus den von der Bereitschaftserfassungseinheit zur Verfügung gestellten Betriebsbereitschaftswerten mindestens einen damit korrelierten Geschwindigkeitswert zu bestimmen.

Es ist möglich, Grenzwerte für die Fahrzeuggeschwindigkeit in Abhängigkeit vom aktuellen Systemzustand des Lenksystems, insbesondere bezüglich der Verfügbarkeit und der Betriebsbereitschaft der Aktuatoren, vorzugeben, um die Geschwindigkeit des Fahrzeugs davon abhängig automatisiert zu steuern, oder zumindest auszugeben oder anzuzeigen, um den Fahrer zu informieren oder zu warnen. Mit anderen Worten kann die Geschwindigkeit durch eine aktuell vorhandene System- oder Steuerkapazität des Lenksystems bestimmt werden, und zur weiteren Verarbeitung genutzt werden.

Im Kraftfahrzeug, auch einfach als Fahrzeug bezeichnet, ist eine Fahrzeugsteuerung vorgesehen, die eine Geschwindigkeitssteuereinheit, die die Geschwindigkeit des Fahrzeuges beeinflussen kann, umfasst. In einer bevorzugten Ausführungsform ist es vorgesehen, dass die Geschwindigkeitsbestimmungseinheit mindestens einen bestimmten Geschwindigkeitswert in Form von damit korrelierten Geschwindigkeitssteuersignalen an die Fahrzeugsteuerung bzw. insbesondere die Geschwindigkeitssteuerung übermittelt, damit diese derart angesteuert ist, die Fahrzeuggeschwindigkeit zu begrenzen. Die Geschwindigkeitsbestimmungseinheit kann dazu direkt oder mittelbar, über die Ausgabeeinheit, mit der Fahrzeugsteuerung kommunizieren.

Dadurch, dass die Grenzwerte automatisiert an die Geschwindigkeitssteuerung übermittelt werden, kann die Fahrzeuggeschwindigkeit automatisiert auf zulässige Werte begrenzt werden. Daraus resultiert der Vorteil, dass auch in einem Störfall, bei dem einzelne oder mehrere Aktuatoren nur noch eingeschränkt funktionieren oder ausfallen, durch die Ansteuerung der intakt verbleibenden Aktuatoren eine jederzeit sichere Lenkung des Fahrzeugs gewährleistet ist. Dabei können einerseits potentielle Funktionseinschränkungen der Aktuatoren durch zu hohe oder zu geringe Fahrzeuggeschwindigkeiten vermieden werden und andererseits kann das Fahrzeug innerhalb maximal zulässiger Geschwindigkeitsbereiche in Abhängigkeit von der verbleibenden System- oder Steuerkapazität des Lenksystems weiterbewegt werden.

Dadurch ergibt sich der Vorteil, dass an einen auftretenden Störfall des Lenksystems angepasste und abgestufte Sicherungsmaßnahmen eingeleitet werden können, welche den Fahrbetrieb so wenig wie möglich beeinträchtigen. Dadurch kann das Fahrzeug im Störfall zwar nur mit eingeschränkter Geschwindigkeit, aber mit hoher Sicherheit weiter mit eigener Kraft betrieben werden, um die nächstgelegene Serviceeinrichtung zu erreichen. Dadurch werden potentielle Gefahrensituationen durch eine abrupte Systemabschaltung während der Fahrt weitgehend vermieden, und - soweit eine hinreichende Betriebsbereitschaft gegeben ist - keine aufwendige Bergung des Fahrzeugs erforderlich.

Die Erfindung ermöglicht dadurch, dass die Betriebsbereitschaft bevorzugt sämtlicher verfügbarer Aktuatoren zur Bewertung der aktuellen System- oder Steuerkapazität des Lenksystems berücksichtigt wird, eine vorteilhaft hohe Nutzung der redundanten Lenksysteme. Bevorzugt ist vorgesehen, dass die Geschwindigkeitsbestimmungseinheit ausgestaltet und eingerichtet ist zur Bestimmung einer zulässigen Maximalgeschwindigkeit und/oder einer zulässigen Mindestgeschwindigkeit, auch als Minimalgeschwindigkeit bezeichnet. Die mit der Fahrzeuggeschwindigkeit ansteigenden fahrdynamisch wirkenden Kräfte, welche zur Manövrierbarkeit des Fahrzeugs sicher beherrscht werden müssen, können durch die Festlegung der Maximalgeschwindigkeit sicher begrenzt werden. Dadurch, dass die Effektivität bestimmter Aktuatoren prinzipbedingt von der Fahrzeuggeschwindigkeit abhängt, und erst ab einer bestimmten minimalen oder Mindestgeschwindigkeit im Fahrbetrieb zur Lenkung realistisch nutzbar ist, beispielsweise bei einer Steuerung des Fahrwerks und/oder der Antriebsmomente, kann eine Mindestgeschwindigkeit als untere Grenze für die Betriebsbereitschaft berücksichtigt werden. Bevorzugt kann zwischen Maximal- und Mindestgeschwindigkeit ein zulässiger Geschwindigkeitsbereich der Bahngeschwindigkeit des Kraftfahrzeugs definiert werden.

Es ist vorteilhaft, dass eine Zustandsklasse eine zulässige Mindestgeschwindigkeit und eine zulässige Maximalgeschwindigkeit aufweist, wobei die Mindestgeschwindigkeit auch null sein kann. Dabei ist es möglich, dass zur Bestimmung der Zustandsklasse lediglich die prinzipielle aktuelle Verfügbarkeit der Aktuatoren des Lenksystems berücksichtigt. Dadurch ist eine vorteilhaft einfache und robuste Ausgestaltung der Lenksteuereinheit möglich. Eine Festlegung von Zustandsklassen kann mit geringem Aufwand erfolgen, beispielsweise kann eine Störung oder ein Ausfall eines Aktuators einfach mit der Reduzierung der Maximalgeschwindigkeit verknüpft sein.

In einer vorteilhaften Weiterbildung der Erfindung kann vorgesehen sein, dass die Geschwindigkeitsbestimmungseinheit ausgestaltet und eingerichtet ist zur Bestimmung eines zulässigen Geschwindigkeitsbereichs abhängig von einer Zustandsklassen-Kombination, welche aus spezifischen Funktionsparametern spezifischer verfügbarer Aktuatoren ermittelt wird. Eine Zustandsklassen-Kombination wird gleichbedeutend auch als erweiterte Zustandsklasse oder Spezial-Zustandsklasse bezeichnet. Zur Bestimmung einer Spezial-Zustandsklasse wird zur Bestimmung der Maximalgeschwindigkeit nicht nur die grundsätzliche Verfügbarkeit der Aktuatoren berücksichtigt, sondern es werden darüber hinaus spezifische funktionale Eigenschaften, ein variabler Grad der verbleibenden Verfügbarkeit und/oder weitere, für einzelne Aktuatoren spezifische Parameter mit einbezogen. Durch Einführung der Zustandsklassen-Kombination bzw. Spezial-Zustandsklassen ist eine weiter differenzierte Berücksichtigung der Betriebsbereitschaft der Aktuatoren zur Begrenzung der Fahrzeuggeschwindigkeit möglich, und damit eine bessere Ausnutzung der redundanten Ressourcen des Lenksystems.

Es ist möglich, dass die Bereitschaftserfassungseinrichtung ausgestaltet und eingerichtet ist, aus den erfassten Betriebsbereitschaftswerten als Zustandsklassen zu bestimmen, welche die spezifische Verfügbarkeit bevorzugt sämtlicher Aktuatoren beinhaltet, wobei die Bereitschaftserfassungseinrichtung mit der Eingabeeinheit verbunden ist, um die Zustandsklasse zu übermitteln. Die Verfügbarkeit kann die relative Betriebsbereitschaft jedes Aktuators beinhalten. Dabei kann die Eingabeeinheit ausgestaltet und eingerichtet sein, um ein Eingabesignal einer eingehenden Zustandsklasse zur Ansteuerung einzelner oder spezifischer Kombinationen von Aktuatoren umzusetzen, um die Bahnführung zu optimieren - bezüglich Sicherheit, Energieverbrauch, und/oder sonstiger zur Verfügung stehender Ressourcen.

Es ist möglich, dass die Aktuatoren eine mit einem Rad oder einer Gruppe von Rädern zusammenwirkende Lenkwinkelstellvorrichtung umfassen. Dabei handelt es sich um eine klassische Fahrzeuglenkung zur Erzeugung eines Lenkeinschlags durch mechanische Winkelverstellung des Rads relativ zum Fahrzeug. Die Lenkwinkelstelleinrichtung umfasst mindestens einen elektromotorischen Lenkwinkelsteller der bei einer Vorder- oder Hinterachslenkung jeweils eine paarweise Verstellung der Räder ermöglich, oder bei einer Einzelradlenkung jeweils einen individuellen Lenkeinschlag einzelner Räder.

Es kann vorgesehen sein, dass die Aktuatoren eine mit einem Rad oder einer Gruppe von Rädern zusammenwirkende Antriebsvorrichtung und/oder Bremsvorrichtung aufweisen. Dadurch kann für die Lenkung durch das sogenannte torque-vectoring das in ein Rad oder eine Gruppe von Rädern eingebrachte Antriebs- oder Bremsmoment gesteuert werden.

Es kann vorgesehen sein, dass die Aktuatoren eine mit einem Rad oder einer Gruppe von Rädern zusammenwirkende Fahrwerksvorrichtung aufweisen. Eine derartige Fahrwerksvorrichtung umfasst mindestens ein funktionales Element oder Baugruppe der Radaufhängung, Federung, Stoßdämpfer, welche durch ihre Ausgestaltung und Verstellung Einfluss nehmen kann auf die Bahnführung des Fahrzeugs. Zur Verstellung ist mindestens ein elektromotorischer Versteller vorgesehen, der von der Lenksteuereinheit ansteuerbar ist.

Bevorzugt kann vorgesehen sein, dass die Lenksteuereinheit verbunden ist mit einer Geschwindigkeitsmesseinrichtung und/oder einer Lenkwinkelerfassungseinrichtung. Durch die

Geschwindigkeitsmesseinrichtung kann die Umfangsgeschwindigkeit eines oder mehrerer Räder und/oder die Bahngeschwindigkeit des Fahrzeugs relativ zur Fahrbahn. Die Geschwindigkeitsmesswerte können in vorteilhafter Weise mit einbezogen werden in die erfindungsgemäße Bestimmung der Betriebsbereitschaftswerte, beispielsweise um zu erkennen, ob torque vectoring durch Abbremsung von Rädern möglich ist. Durch die Bestimmung von Schlupf zwischen Rad und Fahrbahn kann auf die Fahrbahnbeschaffenheit geschlossen werden, was wiederum als Effektivitätsparameter zur Ermittlung einer Zustandsklasse genutzt werden kann. Eine Lenkwinkelerfassungseinrichtung ermöglicht die Erfassung des Lenkeinschlagwinkels eines gelenkten Rades, und kann somit gegebenenfalls zur Bewertung der Betriebsbereitschaft mit einbezogen werden..

Es kann vorgesehen sein, dass eine manuelle Lenkhandhabe zur Eingabe von manuellen Lenkbefehlen mit der Eingabeeinheit und/oder mindestens einem Rad wirkverbunden ist. Eine derartige Lenkhandhabe kann beispielsweise ein an sich bekanntes Lenkrad zur manuellen Erzeugung eines Lenkeinschlags umfassen. Das Lenkrad kann eine direkte mechanische Verbindung mit gelenkten Rädern, oder zusätzlich oder - in einem reinen Steer-by-Wire-Lenksystem - alternativ ausgebildet sein, um abhängig von einem manuellen Lenkeingriff elektrische Steuersignale an die Lenksteuereinheit abzugeben.

Es ist weiter möglich, dass das Lenksystem eine Schnittstelle aufweist zum Austausch externer Steuerungsparameter. Die Schnittstelle kann bevorzugt an der Lenksteuereinheit, der Eingabeeinheit und/oder die Ausgabeeinheit ausgebildet oder damit verbunden sein. Die Schnittstelle kann uni- oder bidirektional ausgebildet sein, um für die Quersteuerung potentiell relevante Messwerte, Daten und/oder sonstige Steuersignale mit der Lenksteuereinheit auszutauschen. Derartige Steuerungsparameter können beispielsweise Positions- und Steuerwerte für autonomes Fahren beinhalten, sowie Streckenparameter, Umgebungsparameter wie Temperatur, Feuchtigkeit, Fahrbahnbeschaffenheit oder dergleichen. Dadurch ist es in vorteilhafter Weise möglich, die zulässige Fahrzeuggeschwindigkeit zur Gewährleistung einer optimalen Lenkbarkeit des Fahrzeugs unter Berücksichtigung externer Parameter weiter zu optimieren.

Die Erfindung umfasst ein Verfahren zur Steuerung eines Lenksystems eines Kraftfahrzeugs, umfassend eine Mehrzahl von mit jeweils mindestens einem Rad wirkverbundenen Aktuatoren und einer damit verbundenen Lenksteuereinheit, die eine Eingabeeinheit und eine Ausgabeeinheit aufweist,
bei dem in die Eingabeeinheit Eingabesignale eingegeben werden, um einen Bahnverlauf vorzugeben, und die Ausgabeeinheit die Aktuatoren ansteuert,
welches die Schritte umfasst:
   - Erfassen der Betriebsbereitschaft der Aktuatoren,
   - Bilden eines Betriebsbereitschaftswerts für jeden Aktuator,
   - Bestimmen mindestens eines zulässigen Geschwindigkeitsbereichs aus den Betriebsbereitschaftswerten der Aktuatoren,
   - Begrenzen der Fahrzeuggeschwindigkeit innerhalb des zulässigen Geschwindigkeitsbereichs,
   - wobei aus den erfassten Betriebsbereitschaftswerten mindestens eine Zustandsklasse des Lenksystems bestimmt wird,
   - wobei mindestens eine zulässige Geschwindigkeit als Grenzgeschwindigkeit abhängig von einer Zustandsklasse bestimmt wird.

Das Verfahren kann bevorzugt eingesetzt werden bei einem Lenksystem mit den oben beschriebenen Merkmalen und Merkmalskombinationen.

Entsprechend können sämtliche vorangehend zum Betrieb des Lenksystems gemachten Verfahren und Betriebsanweisungen mit in das erfindungsgemäße Verfahren einbezogen werden.

Über die Eingabeeinheit werden elektrische Lenkbefehle in die Lenksteuerung eingegeben, beispielsweise manuell über eine Lenkhandhabe, oder beim autonomen Fahren durch automatisiert bereitgestellte elektrische Steuersignale. Weiterhin können externe Parametern, zu herrschenden Umgebungsbedingungen, zur Rückmeldung der Bahnführung etc.in die Eingabeeinheit eingespeist werden.

Die in die Eingabeeinheit eingegebenen und darin verarbeiteten Steuersignale werden mit der Ausgabeeinheit ausgetauscht, welche entsprechend die Aktuatoren ansteuert, um eine Bahnführung entsprechend der in die Eingabeeinheit eingegebenen Lenkbefehle zu realisieren. Erfindungsgemäß gibt die Ausgabeeinheit auch Geschwindigkeits-Steuersignale ans Fahrzeug ab, um die Fahrzeuggeschwindigkeit abhängig von der aktuell anhand der Betriebsbereitschaft der Aktuatoren erfassten, verfügbaren System- oder Steuerkapazität des Lenksystems zu begrenzen.

Mittels der Bereitschaftserfassungseinheit wird im Betrieb fortlaufend die Verfügbarkeit und Betriebsbereitschaft der Aktuatoren, bevorzugt sämtlicher Aktuatoren gemessen. Aus der gemessenen Betriebsbereitschaft wird ein Betriebsbereitschaftswert für den jeweiligen Aktuator gebildet, bevorzugt ein relativer Betriebsbereitschaftswert. Dieser kann beispielsweise 100% betragen bei voller Betriebsbereitschaft, und entsprechend weniger bei einer Beeinträchtigung, wobei 0% einem Totalausfall entsprechen.

Aus den real ermittelten Betriebsbereitschaftswerten wird ein zulässiger Geschwindigkeitsbereich bestimmt, innerhalb dessen eine sichere Lenkung des Fahrzeugs mittels der noch intakten Aktuatoren möglich ist. Bei der Bestimmung des zulässigen Geschwindigkeitsbereichs werden bevorzugt spezifische Eigenschaften der Aktuatoren mit berücksichtigt, beispielsweise prinzipbedingte funktionale Eigenschaften, wie Lenkeffektivität, und durch den aktuellen Betriebszustand bedingte Eigenschaften, wie beispielsweise eine geschwindigkeitsabhängige Lenkeffektivität.

Der zulässige Geschwindigkeitsbereich wird in Form von elektrischen Geschwindigkeits-Steuersignale an eine Fahrzeugsteuerung übermittelt, konkret eine Geschwindigkeitssteuereinrichtung des Fahrzeugs. Die Geschwindigkeits-Steuersignale umfassen mindestens eine Angabe zur zulässigen Maximalgeschwindigkeit, also eine höchste Grenzgeschwindigkeit, auf welche die mögliche Fahrzeuggeschwindigkeit von der Geschwindigkeitssteuereinrichtung begrenzt wird. Die Maximalgeschwindigkeit ist bei mindestens einem verfügbaren Aktuator größer als null, und kann umso höher sein, je mehr intakte Aktuatoren betriebsbereit sind.

Durch das erfindungsgemäße Verfahren kann in vorteilhafter Weise die redundante Lenkkapazität optimal ausgenutzt werden, um das Fahrzeug mit möglichst hoher Geschwindigkeit, aber ohne Sicherheitseinbußen mit eigenem Antrieb weiter bewegen zu können.

Vorzugsweise wird mindestens eine den Geschwindigkeitsbereich begrenzende zulässige Grenzgeschwindigkeit bestimmt. Bevorzugt wird ausgehend von den gemessenen Betriebsbereitschaftswerten als Grenzgeschwindigkeit mindestens eine Maximalgeschwindigkeit bestimmt, die bei einer Störung des Lenksystems zur Gewährleistung der Manövrierbarkeit und Fahrzeugsicherheit nicht überschritten werden darf. Dadurch kann mit vorteilhaft geringem Steuerungsaufwand ein hohes Sicherheitsniveau einfach dadurch realisiert werden. Konkret ist es möglich, bei einer relativ hohen Betriebsbereitschaft der insgesamt noch intakten und verfügbaren Aktuatoren - beispielsweise bei einer leichten Störung oder einer Störung eines weniger relevanten Aktuators - aufgrund der in diesem Fall noch vorhandenen Redundanz weiterhin eine relativ hohe Maximalgeschwindigkeit zugelassen wird. Falls jedoch eine gravierende Störung auftritt, durch welche die Betriebsbereitschaft des Lenksystems stärker beeinträchtigt wird, beispielsweise durch Totalausfall mehrerer Aktuatoren oder dergleichen, kann die zulässige Maximalgeschwindigkeit auf eine relativ niedrige Notgeschwindigkeit herabgesetzt werden. Dank der Erfindung kann in jedem Fall eine optimierte Anpassung der Fahrzeuggeschwindigkeit an die im Störfall verbleibende System- oder Steuerkapazität des Lenksystems erfolgen.

Zur Begrenzung des zulässigen Geschwindigkeitsbereichs kann als Grenzgeschwindigkeit mit Vorteil eine zulässige untere Mindestgeschwindigkeit bestimmt werden. Die Mindestgeschwindigkeit kann im einfachsten Fall null sein, so dass keine aktive Definition erforderlich ist. Die Mindestgeschwindigkeit kann für die Bewertung der Betriebsbereitschaft von solchen Aktuatoren berücksichtigt werden, deren Wirksamkeit prinzipbedingt von der Fahrzeuggeschwindigkeit abhängt, und die erst ab einer bestimmten minimalen oder Mindestgeschwindigkeit im Fahrbetrieb zur Lenkung realistisch nutzbar sind. So kann beispielsweise bei einer Steuerung über Aktuatoren des Fahrwerks und/oder der Antriebsmomente eine Mindestgeschwindigkeit größer als null als untere Grenze für die Betriebsbereitschaft berücksichtigt werden. Bevorzugt kann zwischen Maximal- und Mindestgeschwindigkeit ein zulässiger Geschwindigkeitsbereich der Bahngeschwindigkeit des Kraftfahrzeugs definiert werden. Der Vorteil ist dabei, dass auch Aktuatoren, die erst ab einer bestimmten Mindestgeschwindigkeit einsetzbar sind, beispielsweise auch Bremsaktuatoren für torque vectoring, zur optimalen Ausnutzung der redundant verfügbaren System- oder Steuerkapazität des Lenksystems mit einbezogen werden können.

Dabei ist es denkbar und möglich, für den Fall, dass die Fahrzeuggeschwindigkeit unter die entsprechend bestimmte Mindestgeschwindigkeit fällt, die für die Funktion eines bestimmten Aktuators erforderlich ist, dieser Aktuator als nicht nutzbar klassifiziert wird, und entsprechend der zulässige Geschwindigkeitsbereich neu bestimmt wird.

Das erfindungsgemäße Verfahren sieht vor, dass aus den erfassten Betriebsbereitschaftswerten mindestens eine Zustandsklasse des Lenksystems bestimmt wird. Bevorzugt können mindestens drei - oder mehr - unterschiedliche Zustandsklassen gebildet werden, welche der vollen Betriebsbereitschaft entsprechen, also 100%, einem Totalausfall, entsprechend einer Betriebsbereitschaft von 0%, und mindesten einem, vorzugsweise mehreren Zwischenzuständen der Betriebsbereitschaft größer 0% und kleiner 100% entspricht.

Die ermittelten Betriebsbereitschaftswerten der einzelnen Aktuatoren werden in einer Zustandsklasse zusammengefasst, welche praktisch mit einem Gesamt-Betriebsbereitschaftswert des Lenksystems korreliert ist. Dazu werden spezifische Funktionsparameter der verschiedenen Aktuatoren, wie beispielsweise Lenkeffektivität, Geschwindigkeitsabhängigkeit, Abhängigkeit von Fahrzeugzustandsparametern (Zuladung etc.) und/oder externen Parameter (Temperatur, Feuchtigkeit, Fahrbahnzustand und dergleichen) ein entsprechend gewichteter Wert der Zustandsklasse erzeugt werden, der mit einem zulässigen Geschwindigkeitswert bzw. Geschwindigkeitsbereich korreliert ist. Durch mehrere Zustandsklassen können abgestufte Sicherheitsklassen definiert werden, denen jeweils definierte zulässige Geschwindigkeitsbereiche zugeordnet sein können. Durch die Definition der Zustandsklassen kann eine Vielzahl von Aktuatoren eines Lenksystems, die jeweils unterschiedliche und von aktuellen Betriebszustand abhängige Lenkeffektivität haben können, und die zusätzlich jeweils jeweils eine von vorhandenen Ressourcen abhängige Betriebsbereitschaft haben können, bei der Bestimmung von zulässigen Geschwindigkeitsbereichen berücksichtigt werden.

Die Bestimmung einer aktuell gültigen Zustandsklasse kann nach einem Algorithmus und/oder mittels eines Zustandsliste (look-up-table) erfolgen, wobei zumindest die Betriebsbereitschaft der Aktuatoren, vorzugsweise mit einer Gewichtung entsprechend der jeweiligen Lenkeffektivität, mit einbezogen wird. Optional können weitere Betriebsparameter wie Geschwindigkeit, Beschleunigung, Lenkeinschlag, Zuladung etc. berücksichtigt werden, und zusätzlich oder alternativ weitere externe Parameter, beispielsweise Umgebungsparameter wie Temperatur, Feuchtigkeit, Fahrbahnbeschaffenheit und dergleichen.

Der Vorteil dabei ist, dass eine jeweilige Zustandsklasse eine klare und eindeutige Information über den Systemzustand des gesamten Lenksystems geben kann und dadurch vorteilhaft zur Steuerung und Begrenzung der Fahrzeuggeschwindigkeit geeignet ist. Die Zustandsklasse kann als Geschwindigkeitssteuersignal zur Begrenzung der Bahngeschwindigkeit an die Geschwindigkeitssteuerung des Kraftfahrzeugs ausgegeben werden, beispielsweise als Maximalgeschwindigkeit und/oder Mindestgeschwindigkeit.

Im einfachsten Fall können die Zustandsklassen unterschiedliche Maximalgeschwindigkeiten definieren, und zwar in mindestens drei Klassen, nämlich für 100% Betriebsbereitschaft, für 0% Betriebsbereitschaft und für Betriebsbereitschaft größer 0% und kleiner 100%. Es kann vorteilhaft sein, eine Differenzierung in mehrere Zustandsklassen vorzusehen, um das redundante Potential optimal nutzen zu können.

Es kann vorgesehen sein, dass mindestens ein zulässiger Geschwindigkeitsbereich abhängig von einer Zustandsklassen-Kombination bestimmt wird, welche aus spezifischen Funktionsparametern spezifischer verfügbarer Aktuatoren ermittelt wird. In einer vorteilhaften Weiterbildung können wie oben erwähnt Kombinationen von Zustandsklassen gebildet werden, oder sogenannte erweiterte oder Spezial-Zustandsklassen. Bei diesen können jeweils zusätzlich zur Maximalgeschwindigkeit mindestens eine Mindestgeschwindigkeit vorgegeben werden, welche die Lenkeffektivität spezieller Aktuatoren mit einbezieht. Dadurch wird eine weiter optimierte Anpassung der zulässigen Geschwindigkeit an die Betriebsbereitschaft des Lenksystems ermöglicht.

Die vorgenannten Spezial-Zustandsklassen können in einer weiteren Weiterbildung noch zusätzlich differenziert werden durch Berücksichtigung weiterer spezifischer Parameter der Aktuatoren, oder von Kombinationen von Aktuatoren, oder speziellen Kombinationen mit externen Parametern, wie oben genannt, um für eine Vielzahl von Betriebszuständen sichere Geschwindigkeitsbereiche angepasst zur Verfügung stellen zu können. Dies ermöglicht eine vorteilhafte Optimierung der zulässigen Geschwindigkeit um die Bahnführung zu optimieren, beispielsweise bezüglich Sicherheit, Energieverbrauch, oder sonstiger zur Verfügung stehender Ressourcen.

Es kann vorteilhaft sein, dass die Aktuatoren abhängig von den in die Eingabeeinheit eingegebenen Eingabesignalen und den Betriebsbereitschaftswerten angesteuert werden. Die Eingabesignale können bevorzugt Lenkbefehle umfassen, die im manuellen Fahrbetrieb manuell eingegeben werden, oder im autonomen Fahrbetrieb automatisiert bereitgestellt werden. Dabei kann bevorzugt gemäß der Erfindung die Fahrzeuggeschwindigkeit abhängig von der Betriebsbereitschaft des Lenksystems begrenzt werden.

Schließlich ist es möglich, dass die Aktuatoren abhängig von externen Umgebungsparametern und/oder internen Betriebsparametern angesteuert werden. Dadurch können externe Parameter wie beispielsweise Temperatur, Feuchtigkeit, Helligkeit, Fahrbahnbeschaffenheit oder dergleichen mit in die Begrenzung der zugelassenen Fahrzeuggeschwindigkeiten mit einbezogen werden. Über die bereits genannten können gegebenenfalls weitere, bisher nicht ausdrücklich genannte Parameter bei der Begrenzung der Fahrzeuggeschwindigkeit berücksichtigt werden, wie Betriebszeit, Fahrprofil, Müdigkeitserkennung und dergleichen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische Darstellung eines Kraftfahrzeuges mit einem erfindungsgemäßen Lenksystem eines Kraftfahrzeugs,
- Figur 2: eine schematische Darstellung eines erfindungsgemäßen Lenksystems eines Kraftfahrzeugs,
- Figur 3: eine schematische Darstellung einer weiteren Ausführung eines erfindungsgemäßen Lenksystems,
- Figur 4: eine weitere Darstellung eines Lenksystems gemäß Figur 2,
- Figur 5: eine schematische Darstellung einer weiteren Ausführung eines erfindungsgemäßen Lenksystems,
- Figur 6: ein Diagramm zur Darstellung von zulässigen Maximalgeschwindigkeiten für bestimmte Zustandsklassen,
- Figur 7: ein Diagramm wie in Figur 5 für erweiterte bzw. Spezial-Zustandsklassen.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

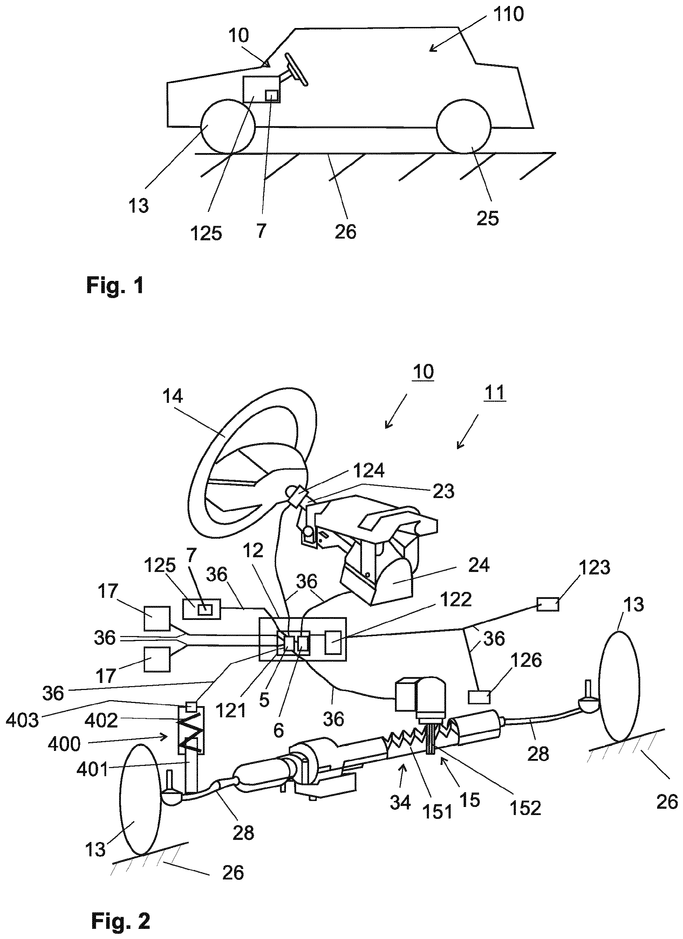

Fig. 1 zeigt schematisch ein Kraftfahrzeug 110 in einer Seitenansicht, umfassend ein Lenksystem 10, eine Fahrzeugsteuerung 125, sowie eine Geschwindigkeitssteuerung 7, die im Beispiel in die Fahrzeugsteuerung 125 integriert ist. Weiter umfasst das Fahrzeug 110 Vorderräder 13 und Hinterräder 25, die sich auf einer Fahrbahn 26 abrollen. Aufgrund der Richtung der Ansicht sind nur die Vorderräder 13 und Hinterräder 25 einer Seite des Fahrzeugs 110 zu erkennen.

Fig. 2 zeigt ein Lenksystem 10 eines Kraftfahrzeugs, gleichbedeutend als Kraftfahrzeuglenksystem 10 bezeichnet, nach einem erfindungsgemäßen Ausführungsbeispiel, wobei das Lenksystem 10 ein Steer-by-Wire-Lenksystem ist. An einer Lenkwelle 23 einer manuellen Lenkhandhabe ist ein Drehwinkelsensor 124 angebracht, welcher als Lenkbefehl den durch Drehen eines Lenkrads 14 aufgebrachten Fahrerlenkwinkel α erfasst. Es kann zusätzlich auch ein Lenkmoment erfasst werden. Des Weiteren ist an der Lenkwelle 23 ein Feedback-Aktuator 24 angebracht, der dazu dient, die Rückwirkungen von einer Fahrbahn 26 auf das Lenkrad 14 zu simulieren und somit dem Fahrer eine Rückmeldung über das Lenk- und Fahrverhalten des Fahrzeugs zu geben. Der Feedback-Aktuator 24 ist mit einer Lenksteuereinheit 12 elektrisch über Signalleitungen 36 signalverbunden und wird durch die Lenksteuereinheit 12 zur Simulation der Rückwirkungen der Fahrbahn 26 angesteuert.

Der Fahrerlenkwunsch wird über den vom Drehwinkelsensor 124 gemessenen Drehwinkel α der Lenkwelle 23 über Signalleitungen 36 an eine Eingabeeinheit einer Lenksteuereinheit 12 weitergegeben, die in Abhängigkeit von weiteren Eingangsgrößen über eine Ausgabeeinheit eine Lenkstelleinrichtung 15 elektrisch ansteuert, die die Stellung der lenkbaren Vorderräder 13 steuert. Die Lenkstelleinrichtung 15 wirkt entsprechend der Ausführung nach Fig. 1 über ein Lenkstangen-Lenkgetriebe 34, wie beispielsweise einem Zahnstangen-Lenkgetriebe, sowie über Spurstangen 28 und anderen Bauteilen mittelbar auf die gelenkten Räder 13. Das Zahnstangen-Lenkgetriebe umfasst dabei ein Ritzel 152, das mit einer Zahnstange 151 kämmt und bei Rotation um seine Achse die Zahnstange 151 in ihrer Längsrichtung verschiebt. Dadurch werden die Spurstangen 28 verschoben und damit die Räder 13 verschwenkt, was eine Lenkbewegung des Kraftfahrzeuges 110 bewirkt. Die Lenkstelleinrichtung 15 ist Teil einer Vorderradlenkeinheit 11.

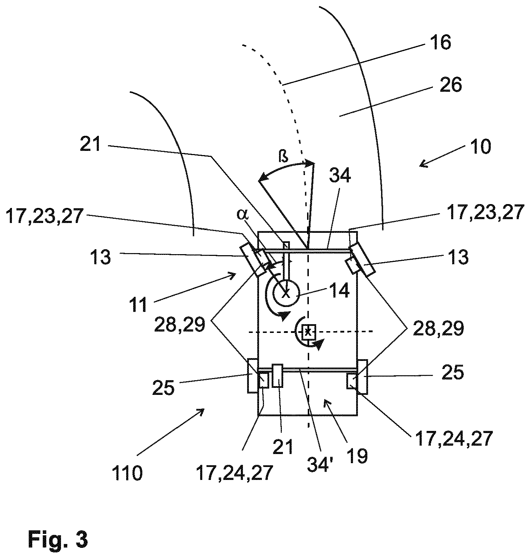

Entsprechend der Ausführung gemäß Fig. 3 sind auch Hinterräder 25 ansteuerbar. Des Weiteren können mit dem Begriff lenkbare Räder 13, 25 sowohl zwei Vorderräder 13 oder zwei Hinterräder 25 oder alle Räder 13 und 25 umfasst sein. Die Lenkstelleinrichtung 15 wirkt entsprechend der Ausführung nach Fig. 1 über ein Lenkstangen-Lenkgetriebe 34, wie beispielsweise einem Zahnstangen-Lenkgetriebe, sowie über Spurstangen 28 und anderen Bauteilen mittelbar auf die gelenkten Räder 13. Die Lenkstelleinrichtung 15 ist Teil einer Vorderradlenkeinheit 11. Die Lenkstelleinrichtung kann alternativ Teil einer Hinterradlenkeinheit 19 sein.

Neben der im Beispiel gezeigten Verwendung von einem Zahnstangen-Lenkgetriebe sind auch andere Lenkgetriebevarianten denkbar und möglich. Beispielsweise kann die Verschwenkung der Räder auch über einen Kugelgewindetrieb bewirkt sein.

Die elektrisch verstellbare Lenkstelleinrichtung 15 stellt einen Aktuator im Sinne der Erfindung dar, der von der Lenksteuereinheit 12 ansteuerbar ist, und wird daher im Folgenden gleichbedeutend auch als Aktuator 15 bezeichnet.

Ferner sind weitere elektrische Aktuatoren 17 vorgesehen, die mit der Lenksteuereinheit 12 zur Ansteuerung über Signalleitungen 36 signalübertragend verbunden sind. Es ist denkbar, dass mehr als zwei Aktuatoren 17 vorgesehen sind. Die Aktuatoren 17 können Teil des Kraftfahrzeuglenksystems 10 sein. Die Aktuatoren 17 sind ausgebildet und eingerichtet, um abhängig von elektrischen Steuersignalen der Lenksteuereinheit 12 eine Querführung des Fahrzeugs zu bewirken, d.h. eine Lenkbewegung. Die Aktuatoren 17 können jeweils ein Einzelradantrieb oder Teil eines Achsantriebs, eine Einzelradbremse, eine Achsbremse, Teil einer Einzelradlenkeinrichtung oder Teil einer Achslenkeinrichtung sein. Alternativ können die Aktuatoren 17 jeweils Teil einer Fahrwerksvorrichtung sein, wie ein Einzelrad-Schwingungsdämpfer, eine Einzelrad-Fahrzeugfeder, eine Einzelrad- oder ein Einzelrad-Hilfslenkaktuator oder dergleichen. Die Aktuatoren 17 sind vorzugsweise dazu angepasst, auf wenigstens eines der Räder 13, 25, insbesondere eines der Vorderräder 13 und/oder eines der Hinterräder 25 einzuwirken, sodass im Fahrbetrieb eine Lenkbewegung des Fahrzeugs eingeleitet bzw. das Fahrzeug gelenkt wird.

Die Lenksteuereinheit 12 umfasst eine Verarbeitungseinheit 121 und einen Datenspeicher 122, die miteinander zum Auslesen und zum Abspeichern von Daten signalverbunden sind. Die Verarbeitungseinheit 121 ist dazu konfiguriert, Daten aus dem Datenspeicher auszulesen und Daten in dem Datenspeicher abzuspeichern. In einer bevorzugten Ausführungsform ist die Verarbeitungseinheit 121 auch in der Lage, Rechenoperationen auszuführen. Im Datenspeicher können Daten von den Aktuatoren 17 betreffend die Reaktionszeit, Wirkungsweise und/oder Verfügbarkeit gespeichert sein. Die Verfügbarkeit des jeweiligen Aktuators 17 kann abhängig von der jeweiligen Fahrsituation im Fahrbetrieb sein. Die Fahrsituation kann beispielsweise Bremsen, Beschleunigen, Geradeausfahrt und/oder Kurvenfahrt umfassen. Zusätzlich oder alternativ können im Datenspeicher 122 Tabellenwerte zu Steuergrößen und/oder Daten zur Erreichung bestimmter Lenkwinkelwerte gespeichert sein.

Die Verfügbarkeit eines Aktuators 17 gibt die Betriebsbereitschaft an. Die Lenksteuereinheit 12 weist bevorzugt als Teil der Verarbeitungseinheit 121 erfindungsgemäß eine Bereitschaftserfassungseinheit 5 und eine Geschwindigkeitsbestimmungseinheit 6 auf. Diese sind miteinander verbunden und können in die Verarbeitungseinheit 121 integriert sein. Die Bereitschaftserfassungseinheit 5 ist über die Signalleitungen 36 mit den Aktuatoren 15 und 17 elektrisch verbunden. Die Signalleitungen 36 dienen als Steuerleitungen zur Übertragung von Steuersignalen zu Ansteuerung an die Aktuatoren 15, 17, und zur Übertragung von Betriebsbereitschaftssignalen, welche Informationen über die aktuelle Betriebsbereitschaft des jeweiligen Aktuators beinhalten, an die Bereitschaftserfassungseinheit 5. Hierzu können die Signalleitungen 36 bidirektional ausgestaltet sein.

Die Verarbeitungseinheit 12 weist eine Ausgabeeinheit auf zur Ansteuerung der Aktuatoren 15, 17.

Ferner ist die Verarbeitungseinheit 121 mit einer Fahrzeugsteuerung 125 des Kraftfahrzeugs signalverbunden, um eine Fahrgeschwindigkeit des Fahrzeugs zu erfassen bzw. auszulesen. Dazu kann die Fahrzeugsteuerung 125 mit einem Sensor zur Erfassung der Fahrgeschwindigkeit signalgekoppelt sein. Gemäß Fig. 2 ist die Lenksteuereinheit 12 mit einem Sensor 123 zur Erfassung der Fahrgeschwindigkeit direkt signalgekoppelt. Konkret ist eine nicht dargestellte Erfassungseinrichtung mit dem Sensor 123 zum Erfassen der Fahrgeschwindigkeit verbunden. Es ist denkbar, dass alternativ die Verarbeitungseinheit 121 mit dem Sensor 123 zum Erfassen der Fahrgeschwindigkeit signalverbunden ist.

Die Fahrzeugsteuerung 125 weist eine Geschwindigkeitssteuerung 7 auf, die ausgebildet und eingerichtet ist, die Fahrzeuggeschwindigkeit abhängig von über die Signalleitung 36 von der Geschwindigkeitsbestimmungseinheit 6 der Lenksteuereinheit 12 übermittelten Geschwindigkeitssteuersignalen einzustellen.

Zusätzlich kann ein Sensor 126 zur Bestimmung des Verstellwinkels der gelenkten Räder 13 vorgesehen sein. Beispielsweise kann die Position der Zahnstange 151 der Lenkstelleinrichtung 15 gemessen werden.

In Fig. 2 ist ferner ein Schwingungsdämpfer 400, umfassend einen Stoßdämpfer 401 und eine Fahrzeugfeder 402 veranschaulicht. Der Schwingungsdämpfer 400 kann durch eine Fahrwerkssteuerung 403 in seinem Verhalten variiert werden, beispielsweise durch Steuersignale, die von der Lenksteuereinheit 12 ausgegeben und über Signalleitungen 36 übermittelt werden.

In Fig. 3 ist ein Kraftfahrzeuglenksystem 10 nach einem weiteren erfindungsgemäßen Ausführungsbeispiel schematisch dargestellt. Fig. 3 zeigt das Kraftfahrzeuglenksystem 10 in einem Kraftfahrzeug 110. Das Kraftfahrzeug 110 ist bei der Fahrt auf einer Fahrbahn 26 gezeigt. Mit anderen Worten befindet sich das Kraftfahrzeug 110 im Fahrbetrieb.

Im Unterschied zum Kraftfahrzeuglenksystem 10 gemäß Fig. 2 weist das Kraftfahrzeuglenksystem 10 gemäß Fig. 3 zwei lenkbare Vorderräder 13 und zwei lenkbare Hinterräder 25 auf. Das Kraftfahrzeuglenksystem 10 gemäß Fig. 3 weist eine Vorderradlenkeinheit 11 und eine Hinterradlenkeinheit 19 auf. Die Vorderradlenkeinheit 11 umfasst ein Zahnstangen-Lenkgetriebe 34, das über Spurstangen mit den beiden Vorderrädern 13 zur Übertragung einer Lenkbewegung gekoppelt ist. Das Zahnstangen-Lenkgetriebe 34 ist, wie in Fig. 1 beschrieben, mit dem Lenkrad 14 zur Übertragung eines Lenkwinkels α auf die Vorderräder 13 verbunden bzw. gekoppelt. Zur Erhöhung der Übersichtlichkeit sind in der Darstellung der Figuren 3 bis 5 sind die Signalleitungen sowie die Steuerungs- und Bestimmungseinrichtungen weggelassen. Diese sind entsprechend analog der Fig. 2 ausgebildet.

Ferner weist die Hinterradlenkeinheit 19 ein weiteres Zahnstangen-Lenkgetriebe 34' auf, das über Spurstangen mit den beiden Hinterrädern 25 zur Übertragung einer Lenkbewegung gekoppelt ist. Zur Betätigung des Zahnstangen-Lenkgetriebes 34' der Hinterradlenkeinheit 19 ist eine Achslenkeinrichtung 21 vorgesehen, die mit dem Zahnstangen-Lenkgetriebe 34' kraftübertragend gekoppelt ist. Die Achslenkeinrichtung 21 kann wie die Lenkstelleinrichtung gleichbedeutend auch als Aktuator 21 im Sinne der Erfindung bezeichnet werden.

Ferner ist gemäß Fig. 3 an jedem Rad 13, 25 ein Einzelradantrieb 27 vorgesehen, der mit dem zugehörigen Rad 13, 25 drehmomentübertragend gekoppelt ist. Zusätzlich ist an jedem Rad 13, 25 eine Einzelradbremse 29 angeordnet, das mit dem jeweiligen Rad 13, 25 bremskraftübertragend koppelbar ist. Jeweils die Einzelradantriebe 27, die Einzelradbremsen 29 und die Achslenkeinrichtung 21 bilden jeweils einen der Aktuatoren 17. Im Unterschied zum Kraftfahrzeuglenksystem 10 gemäß Fig. 1 sind somit bei dem Kraftfahrzeuglenksystem 10 gemäß Fig. 2 mehr als zwei Aktuatoren 17 vorgesehen. Im Beispiel gemäß Fig. 2 sind insgesamt zehn Aktuatoren vorgesehen: vier Einzelradbremsen 29, vier Einzelradantriebe 27, zwei Achslenkeinrichtungen 21. Die Einzelradbremsen 29 können dabei durch eine Bremsanlage und/oder durch eine Einrichtung zur Bremsverteilung des gesamten Bremsmoments auf die einzelnen Räder gebildet werden. Ebenso können die Einzelradantriebe durch eine Einrichtung zur Antriebsverteilung des gesamten Antriebsmoments auf die einzelnen Räder gebildet werden.

Fig. 3 zeigt das Kraftfahrzeug 110 mit dem Kraftfahrzeuglenksystem 10 im Fahrbetrieb, wobei sich das Fahrzeug 110 vor einer Kurvenfahrt befindet. Zu diesem Zeitpunkt trägt der Fahrer über das Lenkrad 14 einen Lenkwinkel α ein, der durch die Lenksteuereinheit 12 über den Drehwinkelsensor 124 erfasst wird. Die Lenksteuereinheit 12 steuert anschließend die Lenkstelleinrichtung 15 der Vorderradlenkeinheit 11 an, die über das Zahnstangen-Lenkgetriebe 34 sowie über die Spurstangen 28 an die beiden Vorderräder 13 überträgt. Daraus resultiert ein gewünschter Fahrzeuglenkwinkel β, der dem durch den Fahrer erwarteten Winkel des Fahrzeuges entspricht.

Die Verarbeitungseinheit 121 ermittelt im Fahrbetrieb des Kraftfahrzeugs 110 fortlaufend einen aktuellen Bahnverlauf 16 und eine Fahrgeschwindigkeit des Kraftfahrzeugs 110. Der aktuelle Bahnverlauf 16 ist in Fig. 3 gestrichelt dargestellt. Des Weiteren bestimmt die Verarbeitungseinheit 121 im Fahrbetrieb fortlaufend, ob der ermittelte aktuelle Bahnverlauf 16 des Kraftfahrzeugs 110 mit dem über das Lenkrad 14 aufgeprägten Verlauf des Lenkwinkels α korreliert, d.h. im Wesentlichen übereinstimmt. Aus dem aufgeprägten Lenkwinkelverlauf und einem ermittelten Fahrgeschwindigkeitsverlauf, durch die fortlaufende bzw. kontinuierliche Ermittlung, berechnet die Verarbeitungseinheit 121 einen zu erwartenden Bahnverlauf. Die Verarbeitungseinheit 121 vergleicht den ermittelten aktuellen Bahnverlauf 16 und den berechneten zu erwartenden Bahnverlauf des Kraftfahrzeugs 110. Für den Fall, dass der aktuelle Bahnverlauf 16 vom zu erwartenden Bahnverlauf derart abweicht, dass ein vordefinierter Grenzwert überschritten wird, stellt die Verarbeitungseinheit 121 eine Fehlfunktion der Vorderradlenkeinheit 11 fest. Eine Fehlfunktion kann vorliegen, wenn der zu erwartende Bahnverlauf vom aktuellen Bahnverlauf 16 um mehr als 10% abweicht. Alternativ kann eine Fehlfunktion vorliegen, wenn der zu erwartende Bahnverlauf vom aktuellen Bahnverlauf 16 um mehr als 5% abweicht.

Eine Fehlfunktion kann aber auch ohne Abweichung vom Bahnverlauf 16 durch eine Detektion eines Fehlsignals in der Steuerung bestimmt werden. Beispielweise kann ein Überstrom oder ein Unterstrom, insbesondere in einem oder mehreren der Aktuatoren, festgestellt werden und daraus unmittelbar das Vorliegen einer Fehlfunktion festgestellt werden.

Wird eine Fehlfunktion festgestellt, ermittelt die Verarbeitungseinheit 121 die von den Aktuatoren 17 zur Verfügung stehenden Aktuatoren 17. Je nach Fahrsituation und Fehlfunktion wählt die Verarbeitungseinheit 121 in Abhängigkeit von den im Datenspeicher gespeicherten Daten der Aktuatoren 17 einen oder mehrere der Aktuatoren 17 aus. Anschließend wird für den oder die ausgewählten Aktuatoren 17 eine Stellgröße durch eine nicht dargestellte Recheneinrichtung der Verarbeitungseinheit 121 bestimmt und an den oder die Aktuatoren 17 ausgegeben. Mit anderen Worten werden der oder die Aktuatoren 17 auf Basis der Stellgröße durch die Verarbeitungseinheit 121 angesteuert. Die Aktuatoren 17 können dabei gleichzeitig oder abwechselnd nacheinander angesteuert werden.

Die Verarbeitungseinheit 121 steuert den oder die Aktuatoren 17 derart an, dass im Zusammenwirken aller ausgewählter Aktuatoren 17 die Abweichung des aktuellen Bahnverlaufs 16 vom zu erwartenden Bahnverlauf verringert bzw. verkleinert wird. Mit anderen Worten steuert die Verarbeitungseinheit 121 die ausgewählten Aktuatoren 17 derart an, dass der aktuelle Bahnverlauf 16 vom zu erwartenden Bahnverlauf mit einer möglichst geringen Abweichung erhalten bleibt. Vorzugsweise weicht der aktuelle Bahnverlauf 16 vom erwarteten Bahnverlauf weniger als 10% ab. Besonders bevorzugt weicht der aktuelle Bahnverlauf 16 vom erwarteten Bahnverlauf weniger als 5% ab.

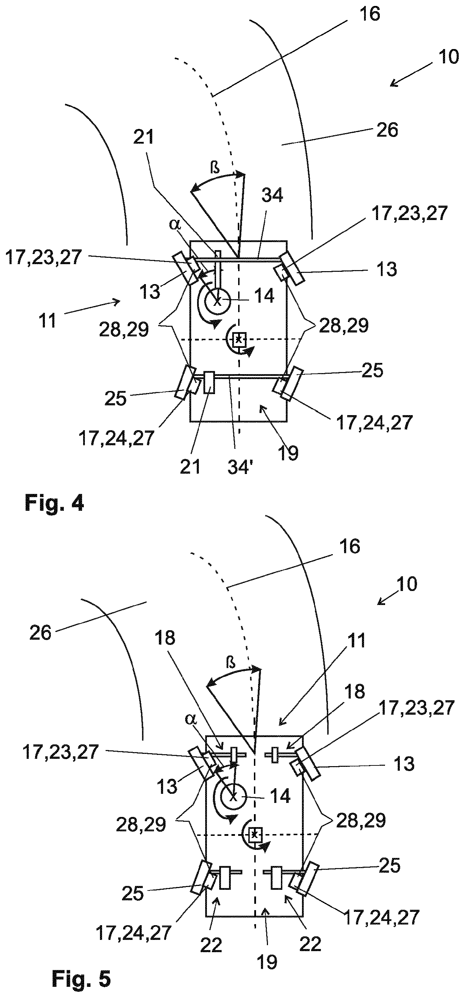

In Fig. 4 ist das Kraftfahrzeuglenksystem 10 gemäß Fig. 3 in einem Zustand einer Fehlfunktion der Vorderradlenkeinheit 11 gezeigt. Hierbei ist zu erkennen, dass die Verarbeitungseinheit 121 die Achslenkeinrichtung 21 der Hinterradlenkeinheit 19 ansteuert und eine entsprechende Lenkstellung auf die beiden Hinterräder 25 überträgt. Dadurch wird im Fahrbetrieb die festgestellte Abweichung des aktuellen Bahnverlaufs 16 vom zu erwartenden Bahnverlauf verringert.

Es ist denkbar, dass die Verarbeitungseinheit 121 zusätzlich wenigstens einen der Einzelradantriebe 27 und/oder eine der Einzelradbremsen 29 ansteuert und so die Abweichung des aktuellen Bahnverlaufs 16 vom erwarteten Bahnverlauf gering hält. Die Einzelradantriebe 27 und die Einzelradbremsen 29 können gesteuerte Antriebs- bzw. Bremsmomente an die Räder 13, 25 abgeben und dadurch eine Lenkbeeinflussung mittels torque vectoring erzeugen. Damit stellen die Einzelradantriebe 27 und die Einzelradbremsen 29 Aktuatoren im Sinne der Erfindung dar.

Des Weiteren ist denkbar, dass die Verarbeitungseinheit 121 über wenigstens eine Fahrwerkssteuerung 403 wenigstens einen Schwingungsdämpfer 400, insbesondere einen Stoßdämpfer 401, und/oder wenigstens eine Fahrzeugfeder 402 derart ansteuert, dass diese auf wenigstens eines der Räder 13, 25 lenkbeinflussend einwirken. Damit stellen die Schwingungsdämpfer 400, Stoßdämpfer 401, und/oder die Fahrzeugfeder 402 Aktuatoren im Zusammenspiel mit der Fahrwerkssteuerung 403 im Sinne der Erfindung dar.

Zusätzlich oder alternativ können Einzelrad-Hilfslenkaktuatoren vorgesehen sein, die über Ansteuerung durch die Verarbeitungseinheit 121 lenkbeeinflussend auf wenigstens eines der Räder 13, 25 einwirken. Diese stellen ebenfalls Aktuatoren im Sinne der Erfindung dar.

Im Unterschied zum Kraftfahrzeuglenksystem 10 gemäß Fig. 3 und 4 sind beim Kraftfahrzeuglenksystem 10 gemäß Fig. 5 anstatt bei der Vorderrad- und der Hinterradlenkeinheit 11, **19 keine** Achslenkeinrichtungen, sondern Einzelradlenkeinrichtungen 18, 22 vorgesehen. Gemäß Fig. 4 ist den Vorderrädern 13 und den Hinterrädern 25 jeweils eine Einzelradlenkeinrichtung 18 zugeordnet. Die Einzelradlenkeinrichtungen 18 der Vorderradlenkeinheit 11 übertragen im Fahrbetrieb eine Lenkstellung auf die Vorderräder 13 separat bzw. unabhängig voneinander.

In Fig. 5 ist das Lenksystem 10 (Kraftfahrzeuglenksystem) gemäß Fig. 3 in einem Zustand einer Fehlfunktion der Vorderradlenkeinheit 11 gezeigt. Hierbei ist zu erkennen, dass die Verarbeitungseinheit 121 die beiden Einzelradlenkeinrichtungen 22 der Hinterradlenkeinheit 19 ansteuert und eine entsprechende Lenkstellung auf die beiden Hinterräder 25 überträgt. Dadurch wird im Fahrbetrieb die festgestellte Abweichung des aktuellen Bahnverlaufs 16 vom zu erwartenden Bahnverlauf verringert.

Auch in diesem Ausführungsbeispiel ist es denkbar und möglich, dass die Verarbeitungseinheit 121 zusätzlich wenigstens einen Schwingungsdämpfer 400, insbesondere einen Stoßdämpfer 401, und/oder wenigstens eine Fahrzeugfeder 402 über wenigstens eine Fahrwerkssteuerung 403 derart ansteuert, dass diese auf wenigstens eines der Räder 13, 25 lenkbeeinflussend einwirken.

Hinsichtlich der weiteren Aktuatoren 17, insbesondere Einzelradantriebe 27 und Einzelradbremsen 29 etc., die von der Verarbeitungseinheit 121 zur Lenkbeeinflussung angesteuert werden, wird auf die Beschreibung der Fig. 4 verwiesen.

Ein Lenksystem 10 in den Ausführungen gemäß den Figuren 1 bis 5 weist zur Lenkbeeinflussung des Fahrzeugs jeweils eine Mehrzahl von Aktuatoren auf, welche unterschiedliche Kombinationen der nachfolgend genannten Aktuatoren umfassen können:
- Lenkstelleinrichtung 15
- Aktuator 17
- Einzelradlenkeinrichtung der Vorderradlenkeinheit 18
- Einzelradlenkeinrichtung der Hinterradlenkeinheit 22
- Achslenkeinrichtung 21
- Einzelradantriebe 27
- Einzelradbremsen 29
- Schwingungsdämpfer 400 mit Fahrwerkssteuerung 403, wirkend auf
   ∘ Stoßdämpfer 401 und/oder
   ∘ Fahrzeugfeder 402.

Die genannten Aktuatoren 15, 17, 18, 22, 21, 27, 29, 400, 401, 402 können einzeln oder in unterschiedlichen Kombinationen von der Lenksteuereinheit 12 zur Erzeugung einer Lenkbeeinflussung angesteuert werden. Dadurch, dass die Lenkfunktion durch unterschiedliche Aktuatoren realisiert werden kann, wird ein redundantes Lenksystem 10 gebildet. Dadurch ist die Lenkbarkeit auch bei einer Störung oder einem Ausfall einzelner Aktuatoren möglich.

Bei einer Störung oder einem Ausfall eines oder mehrerer der genannten Aktuatoren 15, 17, 18, 22, 21, 27, 29, 400, 401, 402 kann die Lenkfunktion durch die dann noch betriebsbereiten, intakten Aktuatoren übernommen werden. Gemäß den erfindungsgemäßen Verfahren wird dabei die zulässige Fahrzeuggeschwindigkeit in dem Maße begrenzt, dass durch die im Störfall betriebsbereiten Aktuatoren eine sichere Lenkung gewährleistet ist.

Im Betrieb werden fortlaufend bevorzugt von sämtlichen Aktuatoren 15, 17, 18, 22, 21, 27, 29, 400, 401, 402 Betriebsbereitschaftswerte erfasst und über die Signalleitungen an die Bereitschaftserfassungseinheit 5 übertragen. Aus den Betriebsbereitschaftwerten, die bevorzugt eine relative Betriebsbereitschaft zwischen 100% entsprechend der vollen Verfügbarkeit und 0% entsprechend einem Totalausfall angeben können, wird eine Zustandsklasse Q0, Q1, Q2, Q3, Q4 oder Q5 gebildet, die ein Maß für den Grad der Betriebsbereitschaft des gesamten Lenksystems 10 angibt, d.h. mit dem aktuellen Zustand des Lenksystems 10 korreliert ist.

Dabei entspricht Q0 der vollen Bereitschaft und Verfügbarkeit sämtlicher Aktuatoren 15, 17, 18, 22, 21, 27, 29, 400, 401, 402, 403. Mit zunehmendem Grad der Störung oder Funktionsausfällen wird eine höhere Zustandsklasse Qx zwischen Q1 bis Q5 festgelegt.

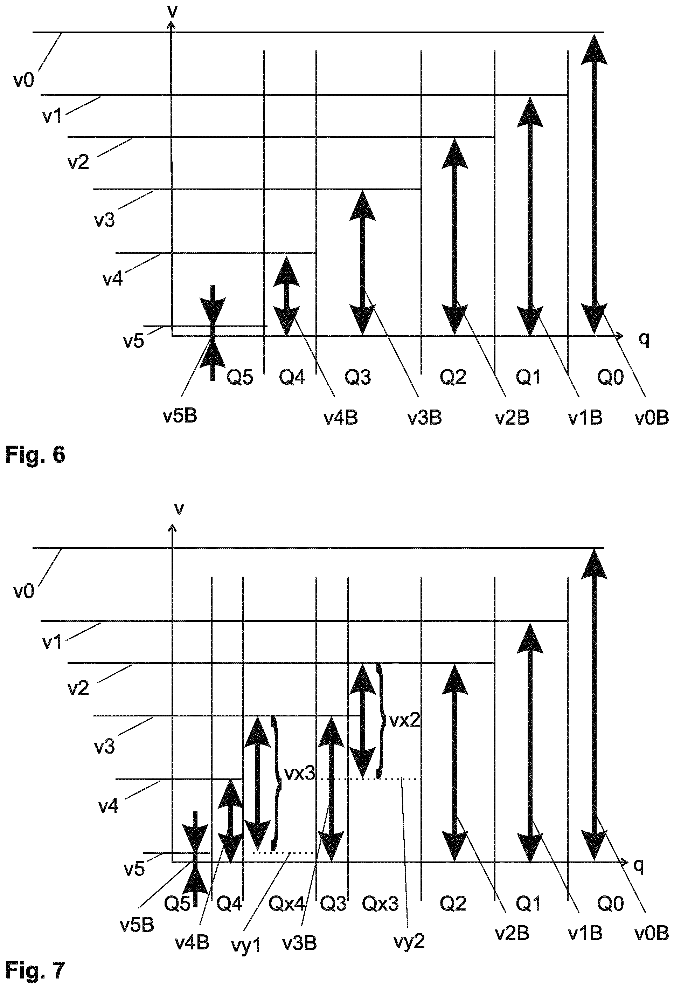

Das erfindungsgemäße Verfahren ist in einer ersten Ausführung in dem Diagramm von Figur 6 veranschaulicht. Auf der waagerechten Achse q ist die Betriebsbereitschaft aufgetragen, die von 0% im Nullpunkt bis zur maximalen Betriebsbereitschaft von 100% bei Q0 ansteigt. Zur Angabe der Betriebsbereitschaft sind die Zustandsklassen Qx als Doppelpfeile eingezeichnet. Auf der senkrechten Achse v sind die maximal zulässigen Fahrzeuggeschwindigkeiten vx mit den Werten v0, v1, v2, v3, v4 und v5 eingetragen, die mit den Zustandsklassen Q0, Q1, Q2, Q3, Q4 und Q5 korreliert sind. Dabei ist v0 bei voller Betriebsbereitschaft gemäß Zustandsklasse Q0 nicht begrenzt, und das Fahrzeug kann mit der maximal möglichen Geschwindigkeit, für die das Fahrzeug bestimmt ist gefahren werden. Das Fahrzeug kann entsprechend im Geschwindigkeitsbereich v0B gefahren werden. Liegt eine leichte Störung vor, beispielsweise durch Ausfall eines der Aktuatoren mit untergeordneter Relevanz, wird eine Begrenzung der Fahrzeuggeschwindigkeit auf eine Grenzgeschwindigkeit von beispielsweise v1 festgelegt. Diese Begrenzung wird von der Lenkungssteuerung 12, konkret von der Geschwindigkeitsbestimmungseinheit, an die Fahrzeugsteuerung 125 übermittelt, an die darin integrierte Geschwindigkeitssteuerung 7. Dadurch wird eine maximale Fahrzeuggeschwindigkeit festgelegt, d.h. die erreichbare Maximalgeschwindigkeit wird auf v1 begrenzt und kann somit im Fahrbetrieb nicht überschritten werden. Das Fahrzeug kann dann innerhalb des Geschwindigkeitsbereiches v1B gefahren werden.

Bei einer stärkeren Störung, wenn beispielsweise weitere der Aktuatoren 15, 17, 18, 22, 21, 27, 29, 400, 401, 402, 403 beeinträchtigt sind oder ausfallen, wird eine höhere Zustandsklasse Q2 bis Q5 festgelegt. Entsprechend wird für jede höhere Zustandsklasse Qx die zulässige Maximalgeschwindigkeit vx reduziert. Das Fahrzeug kann dann also jeweils im Geschwindigkeitsbereich vxB gefahren werden. Beispielsweise kann bei einer erheblichen Betriebsbeeinträchtigung in der Zustandsklasse Q5 die zulässige Geschwindigkeit v5 beispielsweise nur noch Schrittgeschwindigkeit betragen, um das Fahrzeug bei nächster Gelegenheit sicher abstellen zu können. Das Fahrzeug kann also im Geschwindigkeitsbereich v5B gefahren werden.

Das in Figur 6 dargestellte Verfahren kann weitergebildet werden durch Ergänzung mit erweiterten oder Spezial-Zustandsklassen Qx3 und Qx4, wie in Figur 7 dargestellt. Wenn beispielsweise in der Zustandsklasse Q2 Aktuatoren enthalten sind, die funktional bedingt eine bestimmte Mindestgeschwindigkeit erfordern, die bei vy2 liegen kann, wie in Figur 6 gestrichelt eingezeichnet, wird in dieser Spezial-Zustandsklasse Qx3 ein zulässiger Geschwindigkeitsbereich vx2 zwischen einer zulässigen Mindestgeschwindigkeit größer null, beispielsweise vy2, und einer zulässigen Maximalgeschwindigkeit v2 festgelegt, wie in Figur 6 mit dem Doppelpfeil zwischen vy2 und v2 angegeben.

Analog verhält es sich für die Spezial-Zustandsklasse vx3, die im gezeigten Beispiel einen Geschwindigkeitsbereich zwischen vy1 und v3 als zulässig freigibt.

Weitere hier nicht dargestellte Geschwindigkeitsbereiche sind möglich und müssen für jede der möglichen Kombinationen aus den einsatzfähigen Aktuatoren bei der Auslegung des Lenksystems bestimmt werden.

Dank der Erfindung kann abhängig vom Grad der Störung eines redundanten Lenksystems 10 mit einer Mehrzahl von zur Lenkung geeigneten Aktuatoren 15, 17, 18, 22, 21, 27, 29, 400, 401, 402, 403 die im Betrieb mögliche Fahrzeuggeschwindigkeit derart gezielt begrenzt werden, dass unter Einbeziehung der Betriebsbereitschaft das Fahrzeug mit möglichst hoher Geschwindigkeit bei einem hohen Sicherheitsniveau weiter betrieben werden kann.

### Bezugszeichenliste

- 10: Lenksystem (Kraftfahrzeuglenksystem)
- 11: Vorderradlenkeinheit
- 12: Lenksteuereinheit
- 13: Rad (Vorderrad)
- 14: Lenkrad
- 15: Lenkstelleinrichtung
- 16: Bahnverlauf
- 17: Aktuator
- 18: Einzelradlenkeinrichtung der Vorderradlenkeinheit
- 19: Hinterradlenkeinheit
- 21: Achslenkeinrichtung
- 22: Einzelradlenkeinrichtung der Hinterradlenkeinheit
- 23: Lenkwelle
- 24: Feedback-Aktuator
- 25: Rad (Hinterrad)
- 26: Fahrbahn
- 27: Einzelradantrieb
- 28: Spurstange
- 29: Einzelradbremse
- 34: Lenkstangen-Lenkgetriebe der Vorderradlenkeinheit
- 34': Lenkstangen-Lenkgetriebe der Hinterradlenkeinheit
- 36: Signalleitungen
- 110: Kraftfahrzeug
- 121: Verarbeitungseinheit
- 122: Datenspeicher
- 123: Sensor zur Erfassung der Fahrgeschwindigkeit
- 124: Drehwinkelsensor
- 125: Fahrzeugsteuerung
- 126: Sensor zur Erfassung Lenkwinkel Räder
- 151: Zahnstange
- 400: Schwingungsdämpfer
- 401: Stoßdämpfer
- 402: Fahrzeugfeder
- 403: Fahrwerkssteuerung
- 5: Bereitschaftserfassungseinheit
- 6: Geschwindigkeitsbestimmungseinheit
- 7: Geschwindigkeitssteuerung
- α: Lenkwinkel
- β: Fahrzeuglenkwinkel
- Q0, Q1, Q2, Q3, Q4, Q5: Zustandsklasse
- v0, v1, v2, v3, v4, v5, vy1, vy2: Geschwindigkeit
- v0B, v1B, v2B, v3B, v4B, v5B: Geschwindigkeitsbereich
- Qx3, Qx4: Spezial-Zustandsklasse
- vx2, vx3: Geschwindigkeitsbereich

## Patentansprüche

1. Lenksystem (10) für ein Kraftfahrzeug, umfassend eine Mehrzahl von mit jeweils mindestens einem Rad (13, 25) wirkverbundenen Aktuatoren (15, 17, 18, 22, 21, 27, 29, 400, 401, 402) und einer damit verbundenen Lenksteuereinheit (12), die eine Eingabeeinheit und eine Ausgabeeinheit aufweist und ausgestaltet und eingerichtet ist, um die Aktuatoren (15, 17, 18, 22, 21, 27, 29, 400, 401, 402) derart anzusteuern, dass das Kraftfahrzeug abhängig von in die Eingabeeinheit eingegebenen Eingabesignalen auf einem vorgegebenen Bahnverlauf geführt wird,
wobei die Lenksteuereinheit (12, 121) eine Bereitschaftserfassungseinheit (5) und eine Geschwindigkeitsbestimmungseinheit (6) aufweist, wobei die Bereitschaftserfassungseinheit (5) ausgestaltet und eingerichtet ist zur Erfassung von Betriebsbereitschaftswerten der Aktuatoren (15, 17, 18, 22, 21, 27, 29, 400, 401, 402) und die Geschwindigkeitsbestimmungseinheit (6) ausgestaltet und eingerichtet ist, um aus den erfassten Betriebsbereitschaftswerten zulässige Geschwindigkeitswerte (v0, v1, v2, v3, v4, v5, vy1, vy2) der Bahngeschwindigkeit des Kraftfahrzeugs zu bestimmen,
**dadurch gekennzeichnet,**
**dass** die Bereitschaftserfassungseinrichtung (5) ausgestaltet und eingerichtet ist, aus den erfassten Betriebsbereitschaftswerten eine Zustandsklasse (Q0, Q1, Q2, Q3, Q4, Q5, Qx3, Qx4) zu bestimmen und an die Geschwindigkeitsbestimmungseinheit (125, 7) zu übermitteln, die ausgestaltet und eingerichtet ist, abhängig von der Zustandsklasse (Q0, Q1, Q2, Q3, Q4, Q5, Qx3, Qx4) mindestens einen zulässigen Geschwindigkeitswert (v0, v1, v2, v3, v4, v5, vy1, vy2) zu bestimmen.

2. Lenksystem nach Anspruch 1, **dadurch gekennzeichnet, dass** eine Geschwindigkeitssteuerung für das Kraftfahrzeugs vorgesehen ist, die die Geschwindigkeit des Kraftfahrzeugs beeinflussen kann, wobei die Geschwindigkeitsbestimmungseinheit (6) weiter dazu eingerichtet ist, die zulässigen Geschwindigkeitswerte (v0, v1, v2, v3, v4, v5, vy1, vy2) als damit korrelierte Geschwindigkeitssteuersignale an die Geschwindigkeitssteuerung auszugeben.

3. Lenksystem nach einem der vorangehenden Ansprüche, **dadurch gekennzeichnet, dass** die Geschwindigkeitsbestimmungseinheit (6) ausgestaltet und eingerichtet ist zur Bestimmung einer zulässigen Maximalgeschwindigkeit und/oder einer zulässigen Mindestgeschwindigkeit.

4. Lenksystem nach einem der vorangehenden Ansprüche, **dadurch gekennzeichnet, dass** die Geschwindigkeitsbestimmungseinheit (6) ausgestaltet und eingerichtet ist zur Bestimmung eines zulässigen Geschwindigkeitsbereichs (vx2, vx3) abhängig von einer Zustandsklassen-Kombination (Qx3, Qx4), welche aus spezifischen Funktionsparametern spezifischer verfügbarer Aktuatoren (15, 17, 18, 22, 21, 27, 29, 400, 401, 402) ermittelt wird.

5. Lenksystem nach einem der vorangehenden Ansprüche, **dadurch gekennzeichnet, dass** die Aktuatoren (15, 17, 18, 22, 21, 27, 29, 400, 401, 402) eine mit einem Rad (13, 25) oder einer Gruppe von Rädern (13, 25) zusammenwirkende Lenkwinkelstellvorrichtung (15, 18, 22) umfassen.

6. Lenksystem nach einem der vorangehenden Ansprüche, **dadurch gekennzeichnet, dass** die Aktuatoren (15, 17, 18, 22, 21, 27, 29, 400, 401, 402) eine mit einem Rad (13, 25) oder einer Gruppe von Rädern (13, 25) zusammenwirkende Antriebsvorrichtung (27) und/oder Bremsvorrichtung (29) aufweisen.

7. Lenksystem nach einem der vorangehenden Ansprüche, **dadurch gekennzeichnet, dass** die Aktuatoren (15, 17, 18, 22, 21, 27, 29, 400, 401, 402) eine mit einem Rad (13, 25) oder einer Gruppe von Rädern zusammenwirkende Fahrwerksvorrichtung (400, 401, 402) aufweisen.

8. Lenksystem nach einem der vorangehenden Ansprüche, **dadurch gekennzeichnet, dass** die Lenksteuereinheit (12) verbunden ist mit einer Geschwindigkeitsmesseinrichtung (123) und/oder einer Lenkwinkelerfassungseinrichtung (126).

9. Lenksystem nach einem der vorangehenden Ansprüche, **dadurch gekennzeichnet, dass** eine manuelle Lenkhandhabe (14, 23) zur Eingabe von manuellen Lenkbefehlen mit der Eingabeeinheit und/oder mindestens einem Rad (13, 25) wirkverbunden ist.

10. Lenksystem nach einem der vorangehenden Ansprüche, **dadurch gekennzeichnet, dass** das Lenksystem (10) eine Schnittstelle aufweist zum Austausch externer Steuerungsparameter.

11. Verfahren zur Steuerung eines Lenksystems eines Kraftfahrzeugs, umfassend eine Mehrzahl von mit jeweils mindestens einem Rad (13, 25) wirkverbundenen Aktuatoren ((15, 17, 18, 22, 21, 27, 29, 400, 401, 402)) und einer damit verbundenen Lenksteuereinheit (12, 121), die eine Eingabeeinheit und eine Ausgabeeinheit aufweist, bei dem in die Eingabeeinheit Eingabesignale eingegeben werden, um einen Bahnverlauf vorzugeben, und die Ausgabeeinheit die Aktuatoren (15, 17, 18, 22, 21, 27, 29, 400, 401, 402) ansteuert,
**gekennzeichnet durch die Schritte:**
- Erfassen der Betriebsbereitschaft der Aktuatoren (15, 17, 18, 22, 21, 27, 29, 400, 401, 402),
- Bilden eines Betriebsbereitschaftswerts für jeden Aktuator (15, 17, 18, 22, 21, 27, 29, 400, 401, 402),
- Bestimmen mindestens eines zulässigen Geschwindigkeitsbereichs (v0B, v1B, v2B, v3B, v4B, v5B, vx2, vx3) aus den Betriebsbereitschaftswerten der Aktuatoren (15, 17, 18, 22, 21, 27, 29, 400, 401, 402),
- Begrenzen der Fahrzeuggeschwindigkeit innerhalb des zulässigen Geschwindigkeitsbereichs (v0B, v1B, v2B, v3B, v4B, v5B, vx2, vx3),
- wobei aus den erfassten Betriebsbereitschaftswerten mindestens eine Zustandsklasse (Q0, Q1, Q2, Q3, Q4, Q5, Qx3, Qx4) des Lenksystems (10) bestimmt wird,
- wobei mindestens eine zulässige Geschwindigkeit (v0, v1, v2, v3, v4, v5) als Grenzgeschwindigkeit abhängig von einer Zustandsklasse (Q0, Q1, Q2, Q3, Q4, Q5, Qx3, Qx4) bestimmt wird.

12. Verfahren nach Anspruch 11, **dadurch gekennzeichnet, dass** mindestens eine den Geschwindigkeitsbereich begrenzende zulässige Grenzgeschwindigkeit (v1, v2, v3, v4, v5) bestimmt wird.

13. Verfahren nach einem der vorangehenden Ansprüche 11 bis 12, **dadurch gekennzeichnet, dass** mindestens ein zulässiger Geschwindigkeitsbereich (vx2, vx3) abhängig von einer Zustandsklassen-Kombination (Qx3, Qx4) bestimmt wird, welche aus spezifischen Funktionsparametern spezifischer verfügbarer Aktuatoren ermittelt wird.

14. Verfahren nach einem der vorangehenden Ansprüche 11 bis 13, **dadurch gekennzeichnet, dass** aus den erfassten Betriebsbereitschaftswerten eine Zustandsklasse (Q0, Q1, Q2, Q3, Q4, Q5, Qx3, Qx4) bestimmt wird, welche die spezifische Verfügbarkeit der Aktuatoren beinhaltet, wobei die Zustandsklasse an die Eingabeeinheit übermittelt wird und zur Ansteuerung der Aktuatoren umgesetzt wird.

15. Verfahren nach einem der vorangehenden Ansprüche 11 bis 14, **dadurch gekennzeichnet, dass** ein Geschwindigkeitsmesswert und/oder ein Lenkwinkelmesswert und/oder ein aktueller Auslastungsgrad eines Aktuators (15, 17, 18, 22, 21, 27, 29, 400, 401, 402) erfasst wird .

16. Verfahren nach einem der vorangehenden Ansprüche 11 bis 15, **dadurch gekennzeichnet, dass** die Aktuatoren abhängig von den in die Eingabeeinheit eingegebenen Eingabesignalen und den Betriebsbereitschaftswerten angesteuert werden.

17. Verfahren nach einem der vorangehenden Ansprüche 11 bis 16, **dadurch gekennzeichnet, dass** die Aktuatoren (15, 17, 18, 22, 21, 27, 29, 400, 401, 402) abhängig von externen Umgebungsparametern und/oder internen Betriebsparametern angesteuert werden.

18. Kraftfahrzeug umfassend ein Lenksystem nach einem der Ansprüche 1 bis 10.

## Claims

1. A steering system (10) for a motor vehicle, comprising a plurality of actuators (15, 17, 18, 22, 21, 27, 29, 400, 401, 402) each operatively connected to at least one wheel (13, 25) and a steering control unit (12) connected thereto, which has an input unit and an output unit and is designed and set up to control the actuators (15, 17, 18, 22, 21, 27, 29, 400, 401, 402) in such a way that the motor vehicle is guided along a predetermined path as a function of input signals entered into the input unit,
wherein the steering control unit (12, 121) has a readiness detection unit (5) and a speed determination unit (6), wherein the readiness detection unit (5) is designed and set up to detect operational readiness values of the actuators (15, 17, 18, 22, 21, 27, 29, 400, 401, 402) and the speed determination unit (6) is designed and set up to determine permissible speed values (v0, v1, v2, v3, v4, v5, vy1, vy2) of the path speed of the motor vehicle from the detected operational readiness values,
**characterized in**
**in that** the readiness detection device (5) is designed and set up to determine a condition class (Q0, Q1, Q2, Q3, Q4, Q5, Qx3, Qx4) from the detected operational readiness values and to transmit it to the speed determination unit (125, 7), which is designed and set up to determine at least one permissible speed value (v0, v1, v2, v3, v4, v5, vy1, vy2) as a function of the condition class (Q0, Q1, Q2, Q3, Q4, Q5, Qx3, Qx4).

2. Steering system according to claim 1, **characterized in that** a speed control for the motor vehicle is provided, which can influence the speed of the motor vehicle, the speed determination unit (6) further being set up to output the permissible speed values (v0, v1, v2, v3, v4, v5, vy1, vy2) to the speed control as speed control signals correlated therewith.

3. Steering system according to one of the preceding claims, **characterized in that** the speed determination unit (6) is designed and set up to determine a permissible maximum speed and/or a permissible minimum speed.

4. Steering system according to one of the preceding claims, **characterized in that** the speed determination unit (6) is designed and set up to determine a permissible speed range (vx2, vx3) as a function of a state class combination (Qx3, Qx4), which is determined from specific functional parameters of specific available actuators (15, 17, 18, 22, 21, 27, 29, 400, 401, 402).

5. Steering system according to one of the preceding claims, **characterized in that** the actuators (15, 17, 18, 22, 21, 27, 29, 400, 401, 402) comprise a steering angle adjusting device (15, 18, 22) cooperating with a wheel (13, 25) or a group of wheels (13, 25).

6. Steering system according to one of the preceding claims, **characterized in that** the actuators (15, 17, 18, 22, 21, 27, 29, 400, 401, 402) comprise a drive device (27) and/or brake device (29) cooperating with a wheel (13, 25) or a group of wheels (13, 25).

7. Steering system according to one of the preceding claims, **characterized in that** the actuators (15, 17, 18, 22, 21, 27, 29, 400, 401, 402) comprise a chassis device (400, 401, 402) cooperating with a wheel (13, 25) or a group of wheels.

8. Steering system according to one of the preceding claims, **characterized in that** the steering control unit (12) is connected to a speed measuring device (123) and/or a steering angle detecting device (126).

9. Steering system according to one of the preceding claims, **characterized in that** a manual steering handle (14, 23) for inputting manual steering commands is operatively connected to the input unit and/or at least one wheel (13, 25).

10. Steering system according to one of the preceding claims, **characterized in that** the steering system (10) has an interface for exchanging external control parameters.

11. Method for controlling a steering system of a motor vehicle, comprising a plurality of actuators (15, 17, 18, 22, 21, 27, 29, 400, 401, 402), each of which is operatively connected to at least one wheel (13, 25), and a steering control unit (12, 121) connected thereto, which has an input unit and an output unit,
in which input signals are input into the input unit in order to specify a path, and the output unit controls the actuators (15, 17, 18, 22, 21, 27, 29, 400, 401, 402),
**characterized by the steps:**
- Detecting the operational readiness of the actuators (15, 17, 18, 22, 21, 27, 29, 400, 401, 402),
- forming an operational readiness value for each actuator (15, 17, 18, 22, 21, 27, 29, 400, 401, 402),
- determining at least one permissible speed range (v0B, v1B, v2B, v3B, v4B, v5B, vx2, vx3) from the operational readiness values of the actuators (15, 17, 18, 22, 21, 27, 29, 400, 401, 402),
- limiting the vehicle speed within the permissible speed range (v0B, v1B, v2B, v3B, v4B, v5B, vx2, vx3),
- wherein at least one condition class (Q0, Q1, Q2, Q3, Q4, Q5, Qx3, Qx4) of the steering system (10) is determined from the detected operational readiness values,
- wherein at least one permissible speed (v0, v1, v2, v3, v4, v5) is determined as a limit speed depending on a condition class (Q0, Q1, Q2, Q3, Q4, Q5, Qx3, Qx4).

12. Method according to claim 11, **characterized in that** at least one permissible limit velocity (v1, v2, v3, v4, v5) limiting the velocity range is determined.

13. Method according to one of the preceding claims 11 to 12, **characterized in that** at least one permissible speed range (vx2, vx3) is determined as a function of a state class combination (Qx3, Qx4), which is determined from specific functional parameters of specific available actuators.

14. Method according to one of the preceding claims 11 to 13, **characterized in that** a state class (Q0, Q1, Q2, Q3, Q4, Q5, Qx3, Qx4) is determined from the detected operational readiness values, which state class contains the specific availability of the actuators, the state class being transmitted to the input unit and being implemented to control the actuators.

15. Method according to one of the preceding claims 11 to 14, **characterized in that** a measured speed value and/or a measured steering angle value and/or a current degree of utilization of an actuator (15, 17, 18, 22, 21, 27, 29, 400, 401, 402) is detected.

16. Method according to one of the preceding claims 11 to 15, **characterized in that** the actuators are controlled as a function of the input signals entered into the input unit and the operational readiness values.

17. Method according to one of the preceding claims 11 to 16, **characterized in that** the actuators (15, 17, 18, 22, 21, 27, 29, 400, 401, 402) are controlled as a function of external environmental parameters and/or internal operating parameters.

18. A motor vehicle comprising a steering system according to any one of claims 1 to 10.

## Revendications

1. Système de direction (10) pour un véhicule automobile, comprenant une pluralité d'actionneurs (15, 17, 18, 22, 21, 27, 29, 400, 401, 402) en liaison active avec respectivement au moins une roue (13, 25) et une unité de commande de direction (12) reliée à ceux-ci, qui présente une unité d'entrée et une unité de sortie et qui est conçue et agencée pour commander les actionneurs (15, 17, 18, 22, 21, 27, 29, 400, 401, 402) de telle sorte que le véhicule automobile soit guidé sur une trajectoire prédéfinie en fonction de signaux d'entrée entrés dans l'unité d'entrée,
l'unité de commande de direction (12, 121) présentant une unité de détection de disponibilité (5) et une unité de détermination de vitesse (6), l'unité de détection de disponibilité (5) étant conçue et agencée pour détecter des valeurs de disponibilité de fonctionnement des actionneurs (15, 17, 18, 22, 21, 27, 29, 400, 401, 402) et l'unité de détermination de la vitesse (6) est conçue et agencée pour déterminer des valeurs de vitesse admissibles (v0, v1, v2, v3, v4, v5, vy1, vy2) de la vitesse de la bande du véhicule automobile à partir des valeurs de disponibilité de fonctionnement détectées,
**caractérisé en ce que**
**en ce que** le dispositif de détection de disponibilité (5) est conçu et agencé pour déterminer une classe d'état (Q0, Q1, Q2, Q3, Q4, Q5, Qx3, Qx4) à partir des valeurs de disponibilité de fonctionnement détectées et pour la transmettre à l'unité de détermination de vitesse (125, 7) qui est configurée et agencée pour déterminer, en fonction de la classe d'état (Q0, Q1, Q2, Q3, Q4, Q5, Qx3, Qx4), au moins une valeur de vitesse autorisée (v0, v1, v2, v3, v4, v5, vy1, vy2).

2. Système de direction selon la revendication 1, **caractérisé en ce qu'**il est prévu une commande de vitesse pour le véhicule automobile, qui peut influencer la vitesse du véhicule automobile, l'unité de détermination de vitesse (6) étant en outre agencée pour délivrer les valeurs de vitesse autorisées (v0, v1, v2, v3, v4, v5, vy1, vy2) à la commande de vitesse sous forme de signaux de commande de vitesse corrélés à celles-ci.

3. Système de direction selon l'une des revendications précédentes, **caractérisé en ce que** l'unité de détermination de la vitesse (6) est conçue et agencée pour déterminer une vitesse maximale autorisée et/ou une vitesse minimale autorisée.

4. Système de direction selon l'une des revendications précédentes, **caractérisé en ce que** l'unité de détermination de vitesse (6) est configurée et agencée pour déterminer une plage de vitesse autorisée (vx2, vx3) en fonction d'une combinaison de classes d'état (Qx3, Qx4) déterminée à partir de paramètres de fonctionnement spécifiques d'actionneurs spécifiques disponibles (15, 17, 18, 22, 21, 27, 29, 400, 401, 402).

5. Système de direction selon l'une des revendications précédentes, **caractérisé en ce que** les actionneurs (15, 17, 18, 22, 21, 27, 29, 400, 401, 402) comprennent un dispositif de réglage d'angle de braquage (15, 18, 22) coopérant avec une roue (13, 25) ou un groupe de roues (13, 25).

6. Système de direction selon l'une des revendications précédentes, **caractérisé en ce que** les actionneurs (15, 17, 18, 22, 21, 27, 29, 400, 401, 402) comprennent un dispositif d'entraînement (27) et/ou un dispositif de freinage (29) coopérant avec une roue (13, 25) ou un groupe de roues (13, 25).

7. Système de direction selon l'une des revendications précédentes, **caractérisé en ce que** les actionneurs (15, 17, 18, 22, 21, 27, 29, 400, 401, 402) comprennent un dispositif de suspension (400, 401, 402) coopérant avec une roue (13, 25) ou un groupe de roues.

8. Système de direction selon l'une des revendications précédentes, **caractérisé en ce que** l'unité de commande de direction (12) est reliée à un dispositif de mesure de vitesse (123) et/ou à un dispositif de détection d'angle de braquage (126).

9. Système de direction selon l'une des revendications précédentes, **caractérisé en ce qu'**une manette de direction manuelle (14, 23) est reliée fonctionnellement à l'unité de saisie et/ou à au moins une roue (13, 25) pour l'entrée de commandes de direction manuelles.

10. Système de direction selon l'une des revendications précédentes, **caractérisé en ce que** le système de direction (10) présente une interface pour l'échange de paramètres de commande externes.

11. Procédé de commande d'un système de direction d'un véhicule automobile, comprenant une pluralité d'actionneurs ((15, 17, 18, 22, 21, 27, 29, 400, 401, 402)) en liaison active avec respectivement au moins une roue (13, 25), et une unité de commande de direction (12, 121) reliée à ceux-ci, qui présente une unité d'entrée et une unité de sortie,
dans lequel des signaux d'entrée sont entrés dans l'unité d'entrée afin de prédéfinir une trajectoire, et l'unité de sortie commande les actionneurs (15, 17, 18, 22, 21, 27, 29, 400, 401, 402),
**caractérisé par les étapes** suivantes :
- Détection de l'état de préparation au fonctionnement des actionneurs (15, 17, 18, 22, 21, 27, 29, 400, 401, 402),
- formation d'une valeur de disponibilité opérationnelle pour chaque actionneur (15, 17, 18, 22, 21, 27, 29, 400, 401, 402),
- déterminer au moins une plage de vitesse autorisée (v0B, v1B, v2B, v3B, v4B, v5B, vx2, vx3) à partir des valeurs de disponibilité opérationnelle des actionneurs (15, 17, 18, 22, 21, 27, 29, 400, 401, 402),
- limiter la vitesse du véhicule à l'intérieur de la plage de vitesse autorisée (v0B, v1B, v2B, v3B, v4B, v5B, vx2, vx3),
- au moins une classe d'état (Q0, Q1, Q2, Q3, Q4, Q5, Qx3, Qx4) du système de direction (10) étant déterminée à partir des valeurs de disponibilité de fonctionnement détectées,
- au moins une vitesse autorisée (v0, v1, v2, v3, v4, v5) étant déterminée comme vitesse limite en fonction d'une classe d'état (Q0, Q1, Q2, Q3, Q4, Q5, Qx3, Qx4).

12. Procédé selon la revendication 11, **caractérisé en ce que** l'on détermine au moins une vitesse limite admissible (v1, v2, v3, v4, v5) délimitant la plage de vitesses.

13. Procédé selon l'une des revendications 11 à 12 précédentes, **caractérisé en ce qu'**au moins une plage de vitesses autorisées (vx2, vx3) est déterminée en fonction d'une combinaison de classes d'état (Qx3, Qx4) qui est déterminée à partir de paramètres fonctionnels spécifiques d'actionneurs spécifiques disponibles.

14. Procédé selon l'une des revendications 11 à 13 précédentes, **caractérisé en ce qu'**une classe d'état (Q0, Q1, Q2, Q3, Q4, Q5, Qx3, Qx4) contenant la disponibilité spécifique des actionneurs est déterminée à partir des valeurs de disponibilité de fonctionnement détectées, la classe d'état étant transmise à l'unité d'entrée et étant mise en oeuvre pour commander les actionneurs.

15. Procédé selon l'une des revendications 11 à 14 précédentes, **caractérisé en ce qu'**une valeur de mesure de vitesse et/ou une valeur de mesure d'angle de braquage et/ou un taux d'utilisation actuel d'un actionneur (15, 17, 18, 22, 21, 27, 29, 400, 401, 402) est détecté .

16. Procédé selon l'une des revendications 11 à 15 précédentes, **caractérisé en ce que** les actionneurs sont commandés en fonction des signaux d'entrée entrés dans l'unité d'entrée et des valeurs de disponibilité opérationnelle.

17. Procédé selon l'une des revendications 11 à 16 précédentes, **caractérisé en ce que** les actionneurs (15, 17, 18, 22, 21, 27, 29, 400, 401, 402) sont pilotés en fonction de paramètres environnementaux externes et/ou de paramètres de fonctionnement internes.

18. Véhicule automobile comprenant un système de direction selon l'une quelconque des revendications 1 à 10.
